# EUROPEAN PATENT APPLICATION

(11) **EP 2 072 875 A1**
(43) Date of publication of application: **24.06.2009**
(21) Application number: 07832646.9
(22) Date of filing: 28.11.2007
(51) Int. Cl.: F16L 13/00, F16L 19/08

(54) **PIPE JOINT**

(30) Priority: 12.12.2006 JP 2006334710
(71) Applicant: Daikin Industries, Ltd., Osaka 530-8323 (JP)
(72) Inventor: NAKATA, Haruo, Sakai-shi Osaka 591-8511 (JP)
(74) Representative: HOFFMANN EITLE
(86) International application number: PCT/JP2007/072924
(87) International publication number: WO 2008/072470

(57) **Abstract**

A nut 12 serving as a fastening member includes a screw part 14 which is screwed to a joint body 11 and connects a pipe 10, and a holding part 15 which is held by a fastening tool when screwing the nut 12. The screw part 14 and the holding part 15 are coupled to each other before the screwing of the nut 12 to the joint body 11. When screwing the nut 12 to the joint body 11, the coupling of the holding part 15 and the screw part 14 is cancelled when the rotational torque of the holding part 15 reaches a predetermined value which is larger than the rotational torque at the time of completing the connection of the pipe 10, that is, after the connection of the pipe 10 is completed.

## Description

### TECHNICAL FIELD

The present invention relates to a pipe joint which connects a pipe to a joint body by screwing a fastening member to the joint body.

### BACKGROUND ART

Conventionally, in a refrigeration device, a heat pump-type hot water device and the like, a variety of pipe joints, such as a flared pipe joint and a bite type pipe joint which are disclosed in Patent Document 1, for example, have been used for connecting portions of a refrigerant piping through which refrigerant flows. In these flared pipe joints and bite type pipe joints, a pipe is connected to a joint body by screwing a fastening member to the joint body, as disclosed in Patent Document 1. Specifically, regarding the flared pipe joint, the pipe is clamped by the joint body and the fastening member due to the screwing of the fastening member so that the pipe is connected to the joint body. Regarding the bite type pipe joint, a biting portion bites into the pipe by the screwing of the fastening member so that the pipe is connected to the joint body.

In this manner, when the fastening member is screwed to the joint body, a fastening operation which tightens the fastening member with a fastening tool is performed until the rotational torque of the fastening member reaches a predetermined value. Accordingly, in a state of usage where the pipe is connected and refrigerant flows therein, the joint body and the fastening member remain fastened. Therefore, by using a general fastening tool, such as a spanner or a wrench against the fastening member which has already been fastened, anyone can easily loosen the screwing of the fastening member and the joint body or can remove the pipe after loosening the screwing.
Patent Document 1: Japanese Laid-Open Patent Publication No. 2003-74768

### DISCLOSURE OF THE INVENTION

Chlorofluorocarbon gas which is in heavy usage as refrigerants for refrigeration devices these days has been a factor of generating problems of ozone layer depleting, global warming and the like when discharged into the atmosphere. Therefore, the handling of chlorofluorocarbon gas is becoming stricter year by year. Recently, the pervasive opinion is that the part of a pipe which is connected with a pipe joint should be hard to be removed by a non-specialist who does not use a chlorofluorocarbon gas collector. Accordingly, the pipe joint is desired to be configured such that the screwing of a joint body and a fastening member is not easily loosened and that a pipe is not easily removed by loosening the screwing in a state where the pipe is connected.

An objective of the present invention is to provide a pipe joint which is compliant with chlorofluorocarbon gas regulations, while the pipe joint is configured such that the screwing of the joint body and that the fastening member is not easily loosened and the pipe is not easily removed by loosening the screwing by using a general fastening tool against the pipe joint to which the pipe has once been connected.

In order to achieve the above-mentioned objective, and in accordance with one aspect of the present invention, a pipe joint is provided that connects a pipe to a joint body by screwing a fastening member to the joint body. The fastening member includes a screw part which is screwed to the joint body and connects the pipe to the joint body, and a holding part which is held by a fastening tool when screwing the fastening member. The screw part and the holding part are coupled to each other before the screwing of the fastening member to the joint body. A the time of screwing the fastening member to the joint body, the coupling of the holding part and the screw part is cancelled when the rotational torque of the holding part reaches a predetermined value which is larger than the rotational torque at the time of completing the connection of the pipe.

The cancelling of the coupling of the holding part with the screw part refers to the state where the rotational torque of the holding part is not transmitted to the screw part any more. In addition to a case where the holding part is removed from the screw part and is completely separated from the screw part, the cancelling also includes a case where the holding part turns freely relative to the screw part while the holding part and the screw part are integrally assembled.

According to this configuration, the screw part and the holding part, which are formed separately, are coupled before screwing the fastening member to the joint body. At the time of screwing the fastening member to the joint body, the coupling of the holding part and the screw part is cancelled when the rotational torque of the holding part reaches the predetermined value which is larger than the rotational torque at the time of completing the connection of the pipe, that is, the coupling is cancelled after the connection of the pipe is completed. Accordingly, after the pipe is connected, the rotational torque of the holding part is not transmitted to the screw part any more. As a result, it becomes impossible to easily loosen the screwing of the joint body and the screw part, and to easily remove the pipe after loosening the screwing by using a general fastening tool against the pipe joint to which the pipe has already been connected once. Consequently, improper discharge of refrigerant gas into the atmosphere is prevented and the pipe joint conforms to chlorofluorocarbon gas regulations.

In the above-mentioned configuration, the holding part and the screw part are preferably coupled by utilizing the frictional force at the contacting surfaces of both parts. In this case, when the rotational torque of the holding part reaches the predetermined value, the holding part and the screw part start relative movement against the frictional force, so that the coupling of the holding part and the screw part is cancelled. According to this configuration, the rotational torque of the holding part is not transmitted to the screw part any more after the pipe is connected. Therefore, it becomes impossible to easily loosen the screwing of the joint body and the screw part in the state where the pipe is connected, and improper discharge of refrigerant gas is prevented. Further, it becomes possible to adjust the rotational torque which cancels the coupling of the holding part and the screw part by adjusting the friction coefficient at the contacting surfaces, etc. so as to alter the frictional force. In the above-mentioned configuration, the holding part and the screw part are preferably coupled by press-fitting a shaft portion which is substantially coaxial with the rotation axis of the screwing and which is disposed at one of the holding part and the screw part into a hole which is provided at the other of the holding part and the screw part. According to this configuration, it is possible to control the frictional force between the outer circumferential surface of the shaft portion and the circumferential surface of the hole by the degree of the press-fitting of the shaft portion into the hole. Thus, it becomes possible to easily adjust the rotational torque for cancelling the coupling of the holding part and the screw part.

Further, in the above-mentioned configuration, the holding part and the screw part are preferably coupled by adhesion at the contacting surfaces of both parts. In this case, when the rotational torque of the holding part reaches the predetermined value, the holding part and the screw part start relative movement against the adhesion force and the coupling of the holding part and the screw part is cancelled. According to this configuration, the rotational torque of the holding part is not transmitted to the screw part any more after the pipe is connected. Therefore, it becomes impossible to easily loosen the screwing of the joint body and the screw part in the state where the pipe is connected, and improper discharge of refrigerant gas is prevented. Furthermore, it becomes possible to adjust the rotational torque for cancelling the coupling of the holding part and the screw part by adjusting the adhesion force for the coupling of the holding part and the screw part.

Further, in the above-mentioned configuration, the screwing of the screw part to the joint body is preferably performed with a first screw portion which is provided to each of the screw part and the joint body, and the coupling of the holding part and the screw part is preferably performed by the screwing of the holding part and the screw part with a second screw portion which is provided to each of the holding part and the screw part. In this case, the rotation direction of the holding part for the screwing of the holding part and the screw part is set to be opposite to the rotation direction of the screw part for the screwing of the screw part and the joint body. Further, at the time of screwing the fastening member to the joint body, the coupling of the holding part and the screw part is cancelled by loosening the screwing of the screw part and the joint body with the second screw portion after completing the connection of the pipe by the screwing of the fastening member and the joint body with the first screw portion.

According to this configuration, it is possible to easily remove the holding part from the screw part by loosening the screwing of the screw part and the joint body with the second screw portion while rotating the holding part in the same direction after the pipe is connected. Therefore, it becomes impossible to easily loosen the screwing of the holding part and the screw part with the first screw portion in the state where the pipe is connected, and improper discharge of refrigerant gas is prevented.

Further, in the above-mentioned configuration, the screwing of the screw part to the joint body is preferably performed with a third screw portion which is provided to each of the screw part and the joint body, and the coupling of the holding part and the screw part is preferably performed by the screwing of the holding part and the screw part with a fourth screw portion which is provided to each of the holding part and the screw part. In this case, the rotation direction of the holding part for the screwing of the holding part and the screw part is set to be the same as the rotation direction of the screw part for the screwing of the screw part and the joint body. Further, at the time of screwing the fastening member to the joint body, the coupling of the holding part and the screw part is cancelled when the fourth screw portion is broken after the connection of the pipe is completed by the screwing of the fastening member and the joint body with the third screw portion. According to this configuration, the rotational torque is not transmitted to the screw part any more by the breakage of the fourth screw portion after the pipe is connected. Therefore, it becomes impossible to easily loosen the screwing of the joint body and the screw part with the third screw portion in the state where the pipe is connected, and improper discharge of refrigerant gas is prevented.

Further, in the above-mentioned configuration, the coupling of the holding part and the screw part is preferably cancelled when the rotational torque of the holding part reaches the predetermined value and the holding part is broken. According to this configuration, the rotational torque is not transmitted to the screw part any more by the breakage of the holding part after the pipe is connected. Therefore, it becomes impossible to easily loosen the screwing of the holding part and the screw part in the state where the pipe is connected, and improper discharge of refrigerant gas is prevented. In the above-mentioned configuration, the holding part is preferably made of resin. According to this configuration, the holding part is easily broken by applying rotational torque from a fastening tool.

Each of the above-mentioned configurations preferably further includes an annular ferrule which deforms toward the pipe by contacting a cam surface which is formed either at the joint body or the fastening member at the time of screwing the fastening member to the joint body. In this case, the pipe is connected to the joint body by the ferrule biting into a surface of the pipe. According to this configuration, even with a bite type pipe joint having a ferrule, it becomes impossible to easily loosen the screwing of the joint body and the screw part in the state where the pipe is connected.

Further, in each of the above-mentioned configurations, the joint body preferably has a first conical surface of which the diameter becomes smaller toward the fastening member, and the screw part preferably has a second conical surface of which the diameter becomes larger toward the joint body. In this case, an end of the pipe is machined to be flare-shaped by the screwing of the fastening member to the joint body, and the end of the pipe is clamped by clamped between the first conical surface and the second conical surface, so that the pipe is connected to the joint body. According to this configuration, even with such a flared pipe joint, it becomes impossible to easily loosen the screwing of the joint body and the screw part in the state where the pipe is connected

### BRIEF DESCRIPTION OF THE DRAWINGS

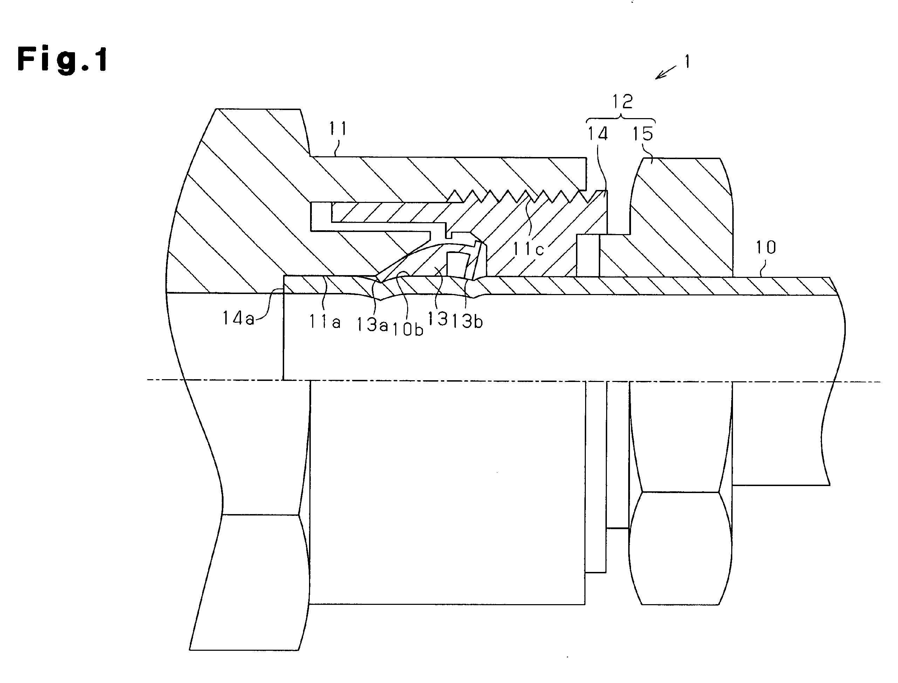

Fig. 1 is a partial cross-sectional view illustrating the configuration of a pipe joint according to a first embodiment;

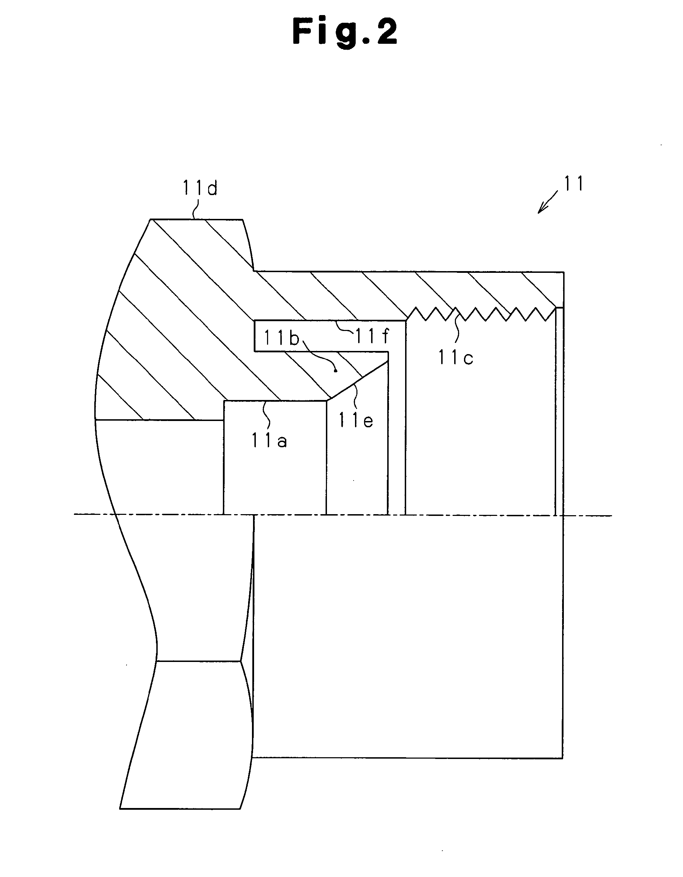

Fig. 2 is a partial cross-sectional view illustrating a joint body;

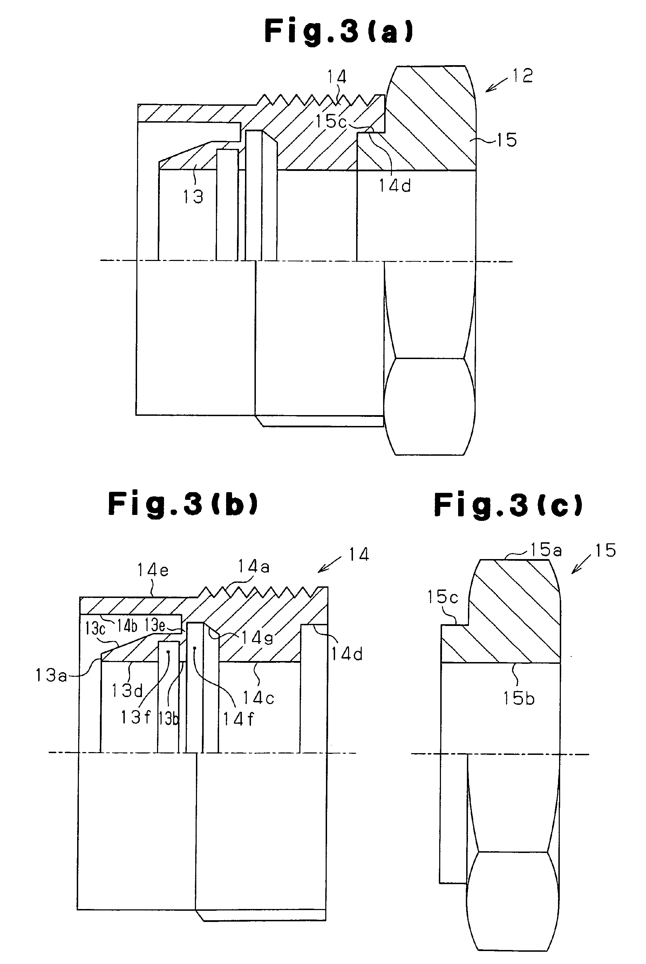

Figs. 3(a) to 3(c) are partial cross-sectional views, wherein Fig. 3(a) illustrates a nut, Fig. 3(b) illustrates a screw part, and Fig. 3(c) illustrates a holding part;

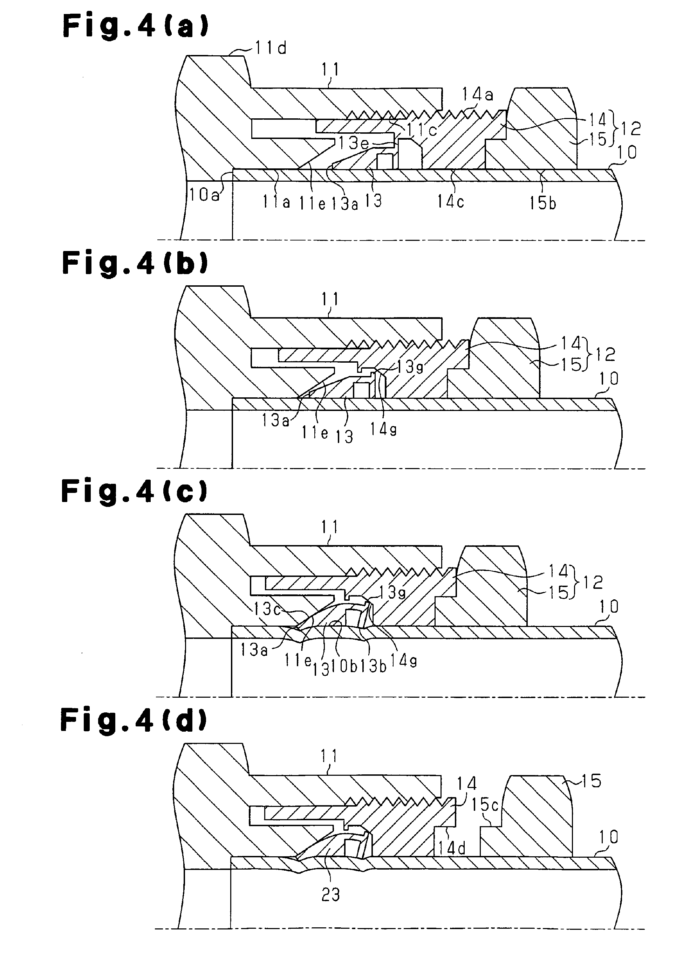

Figs. 4(a) to 4(d) are cross-sectional views, wherein Fig. 4(a) illustrates a state of the pipe joint before a ferrule is cut, Fig. 4(b) illustrates a state after the ferrule is separated, Fig. 4(c) illustrates a state where connection of a pipe is completed, and Fig. 4(d) illustrates a state where coupling of the holding part and the screw part is cancelled;

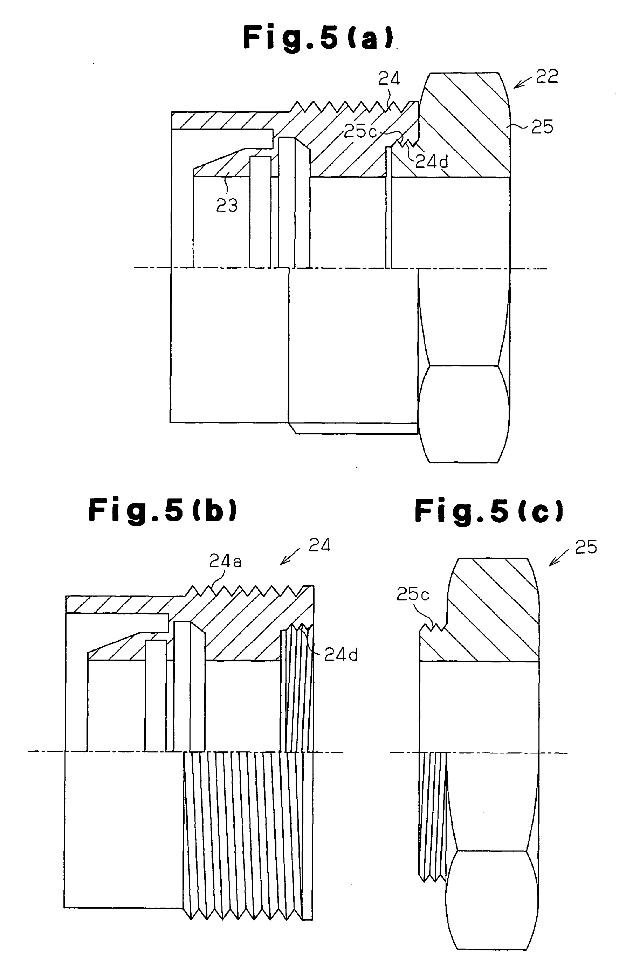

Figs. 5(a) to 5(c) are partial cross-sectional views, wherein Fig. 5(a) illustrates a nut according to a second embodiment, Fig. 5(b) illustrates a screw part, and Fig. 5(c) illustrates a holding part;

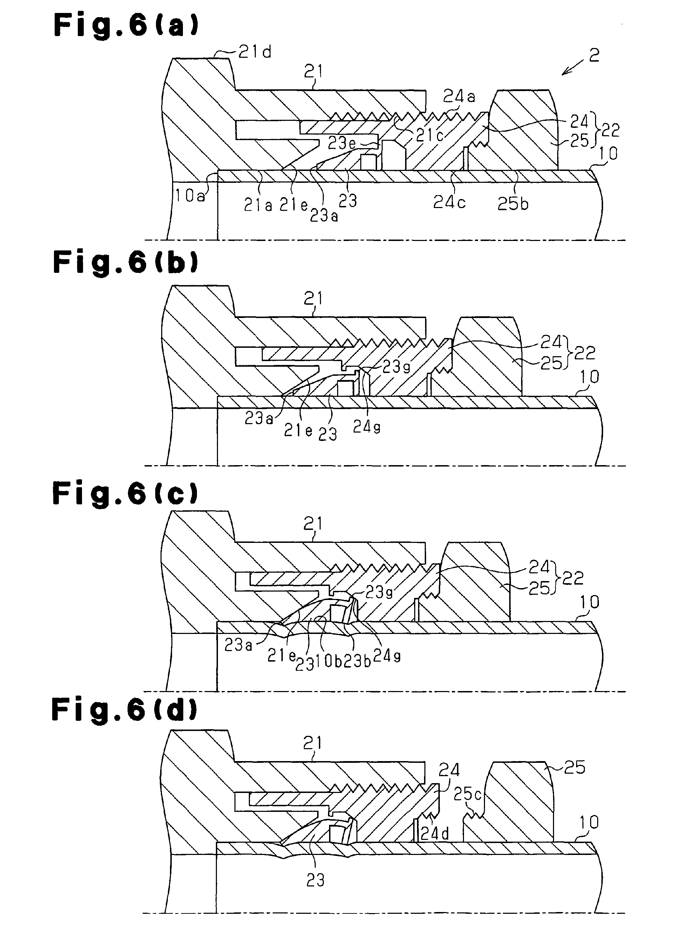

Figs. 6(a) to 6(d) are cross-sectional views, wherein Fig. 6(a) illustrates a state of the pipe joint before a ferrule is cut, Fig. 6(b) illustrates a state after the ferrule is separated, Fig. 6(c) illustrates a state where connection of a pipe is completed, and Fig. 6(d) illustrates a state where coupling of the holding part and the screw part is cancelled;

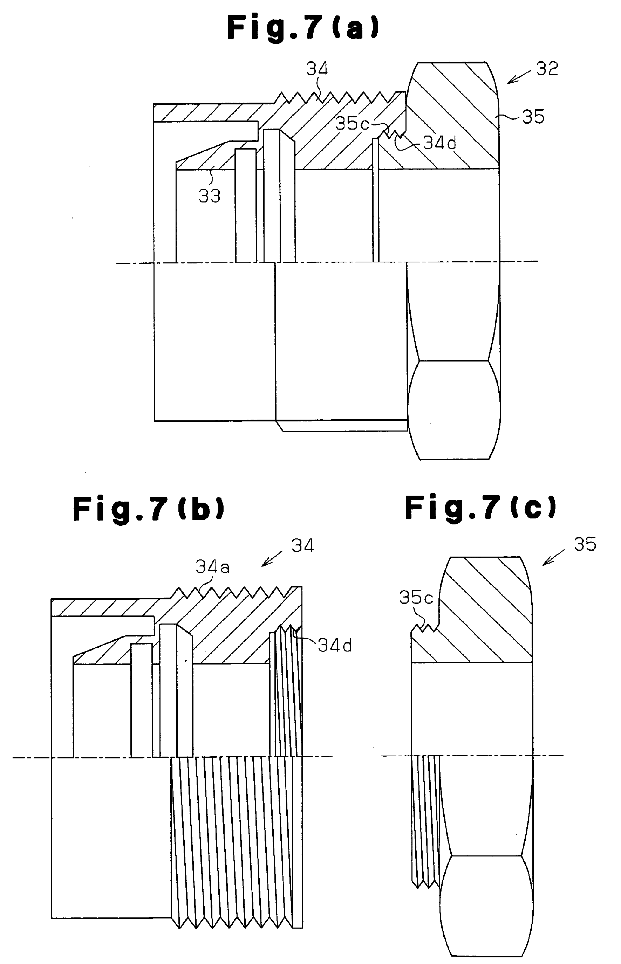

Figs. 7(a) to 7(c) are partial cross-sectional views, wherein Fig. 7(a) illustrates a nut according to a third embodiment, Fig. 7(b) illustrates a screw part, and Fig. 7(c) illustrates a holding part;

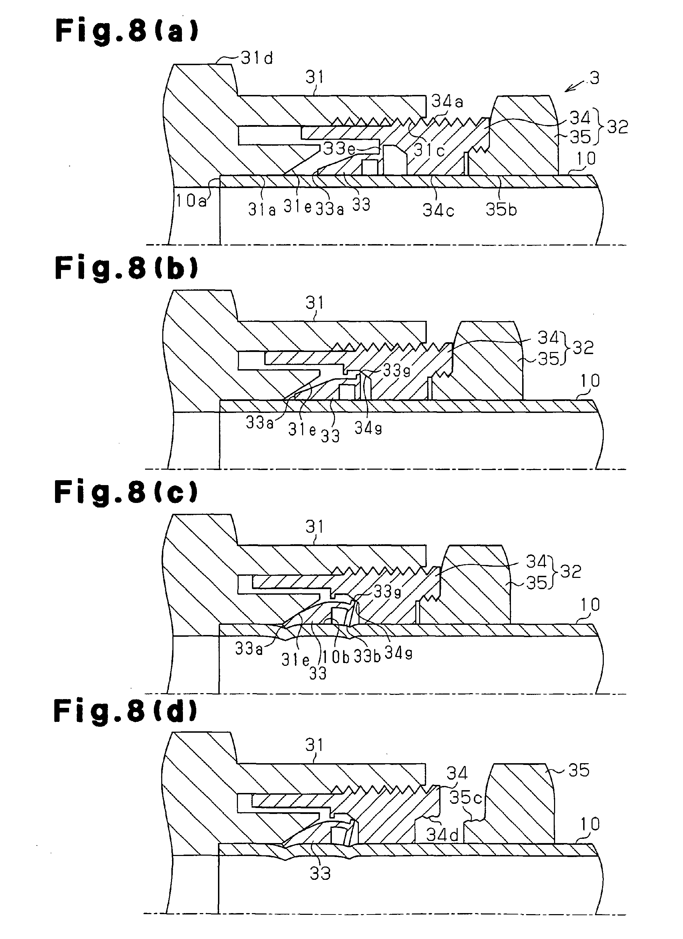

Figs. 8(a) to 8(d) are cross-sectional views, wherein Fig. 8(a) illustrates a state of the pipe joint before a ferrule is separated, Fig. 8(b) illustrates a state after the ferrule is separated, Fig. 8(c) illustrates a state where connection of a pipe is completed, and Fig. 8(d) illustrates a state where coupling of the holding part and the screw part is cancelled;

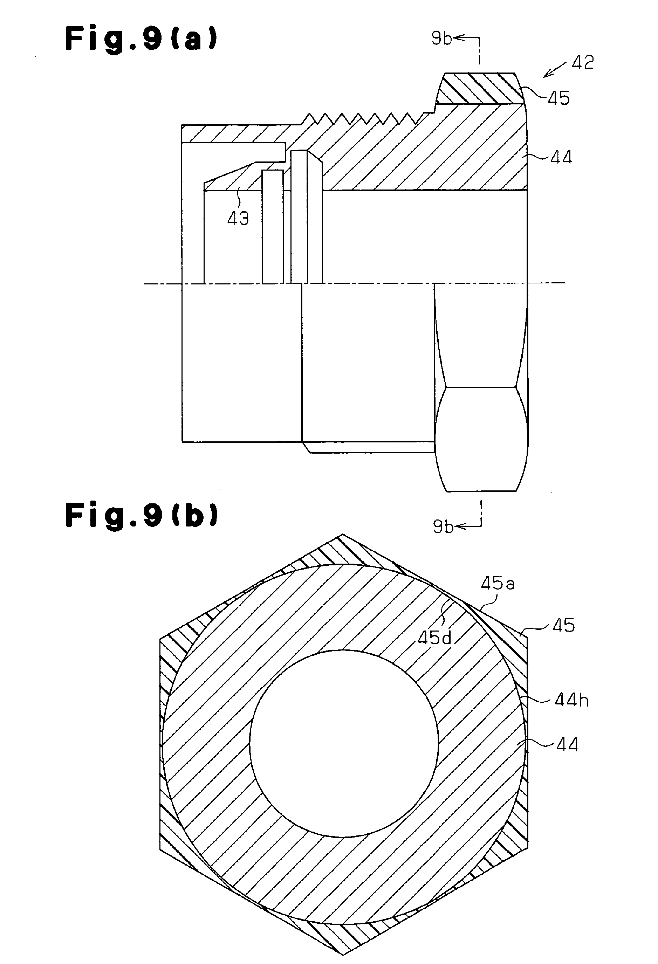

Fig. 9(a) is a partial cross-sectional view illustrating a nut according to a fourth embodiment and Fig. 9(b) is a cross-sectional view taken along line 9b-9b in Fig. 9(a);

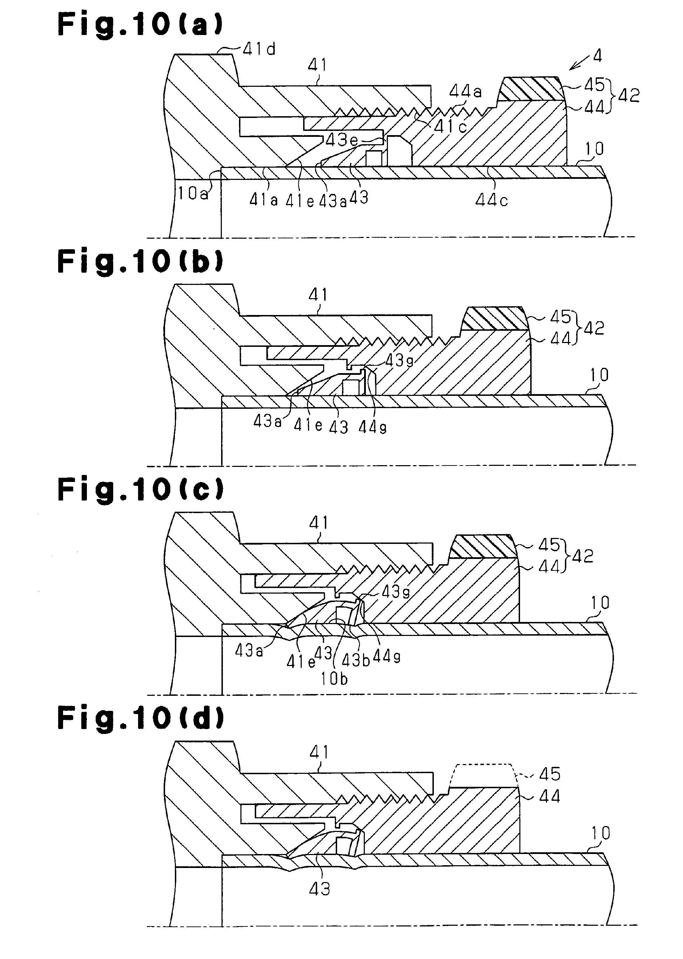

Figs. 10(a) to 10(d) are cross-sectional views, wherein Fig. 10(a) illustrates a state of the pipe joint before a ferrule is cut, Fig. 10(b) illustrates a state after the ferrule is separated, Fig. 10(c) illustrates a state where connection of a pipe is completed, and Fig. 10(d) illustrates a state where coupling of a holding part and a screw part is cancelled;

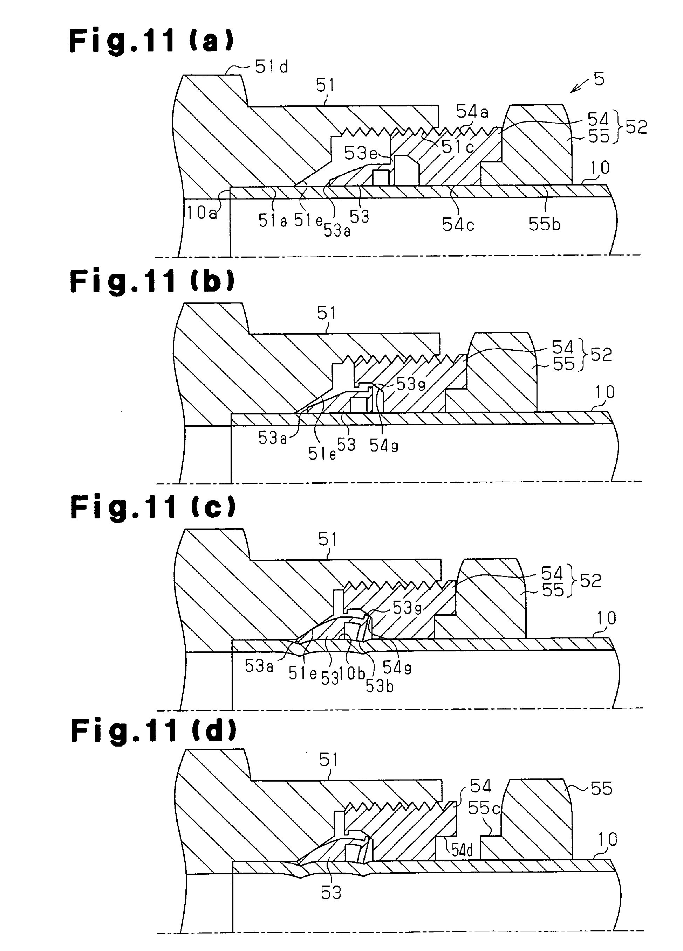

Figs. 11(a) to 11(d) are cross-sectional views of a pipe joint according to a fifth embodiment, wherein Fig. 11(a) illustrates a state of the pipe joint before a ferrule is cut, Fig. 11(b) illustrates a state after the ferrule is separated, Fig. 11(c) illustrates a state where connection of a pipe is completed, and Fig. 11(d) illustrates a state where coupling of a holding part and a screw part is cancelled;

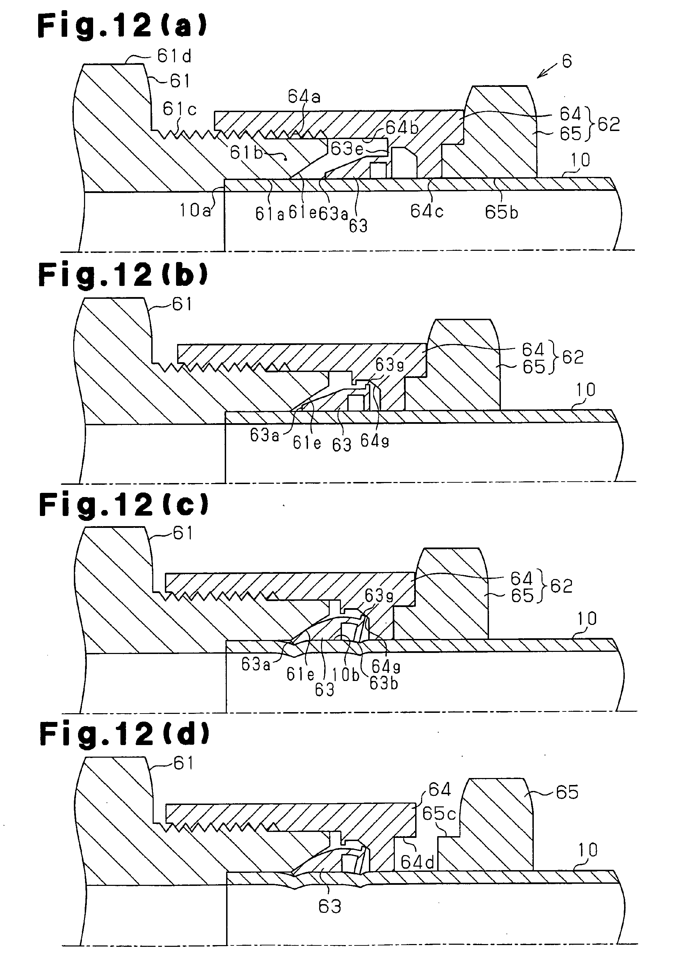

Figs. 12(a) to 12(d) are cross-sectional views of a pipe joint according to a sixth embodiment, wherein Fig. 12(a) illustrates a state of the pipe joint before a ferrule is cut, Fig. 12(b) illustrates a state after the ferrule is separated, Fig. 12(c) illustrates a state where connection of a pipe is completed, and Fig. 12(d) illustrates a state where coupling of a holding part and a screw part is cancelled;

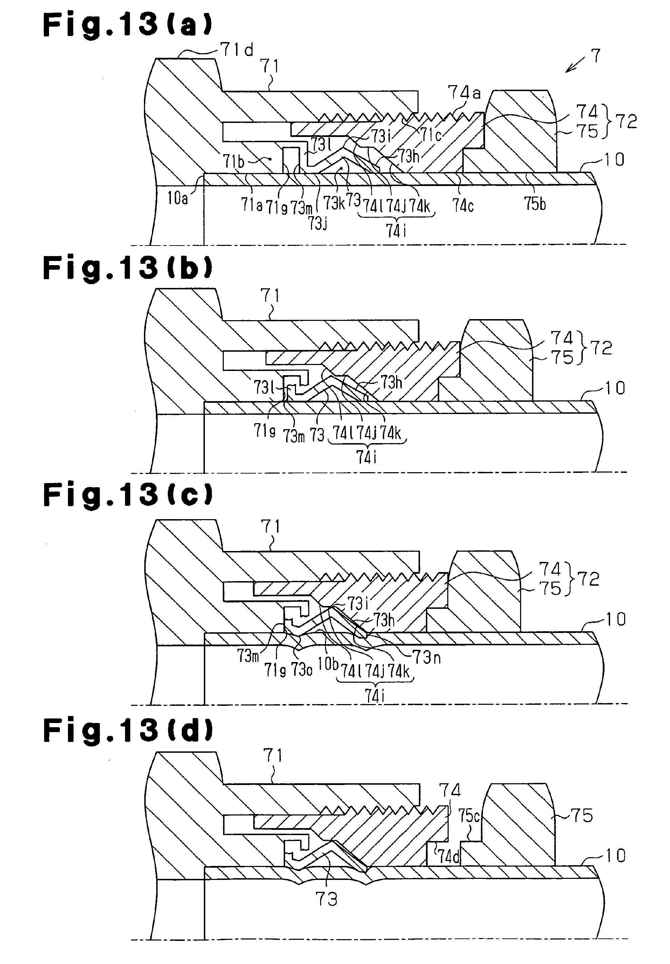

Figs. 13(a) to 13(d) are cross-sectional views of a pipe joint according to a seventh embodiment, wherein Fig. 13(a) illustrates a state of the pipe joint before a ferrule is cut, Fig. 13(b) illustrates a state after the ferrule is separated, Fig. 13(c) illustrates a state where connection of a pipe is completed, and Fig. 13(d) illustrates a state where coupling of a holding part and a screw part is cancelled;

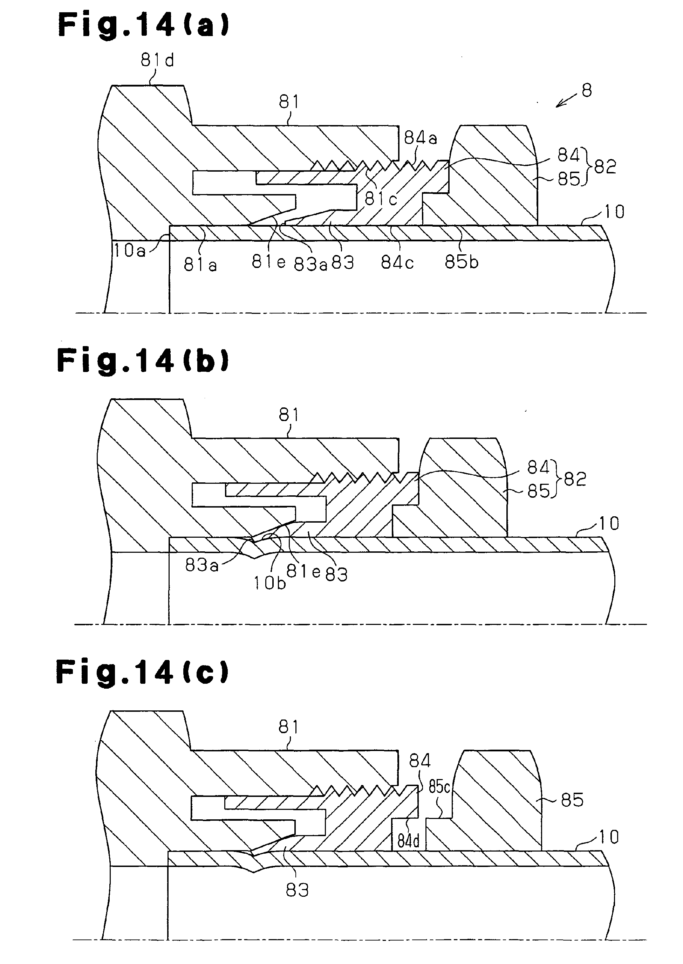

Figs. 14(a) to 14(c) are cross-sectional views of a pipe joint according to an eighth embodiment, wherein Fig. 14(a) illustrates a state before a pipe is connected, Fig. 14(b) illustrates a state where connection of the pipe is completed, and Fig. 14(c) illustrates a state where coupling of a holding part and a screw part is cancelled;

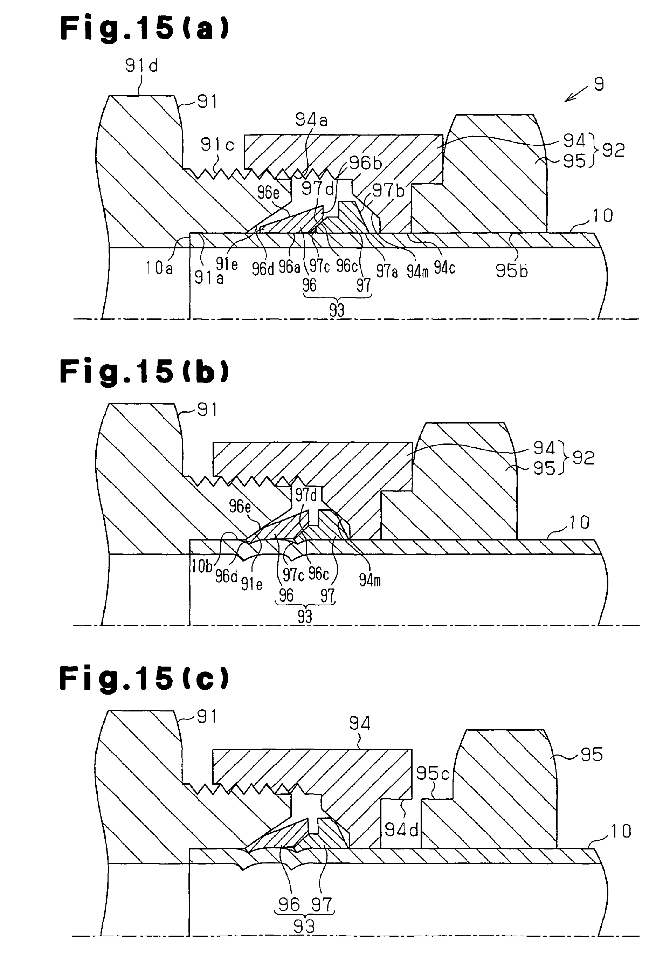

Figs. 15(a) to 15(c) are cross-sectional views of a pipe joint according to a ninth embodiment, wherein Fig. 15(a) illustrates a state before a pipe is connected, Fig. 15(b) illustrates a state where connection of the pipe is completed, and Fig. 15(c) illustrates a state where coupling of a holding part and a screw part is cancelled; and

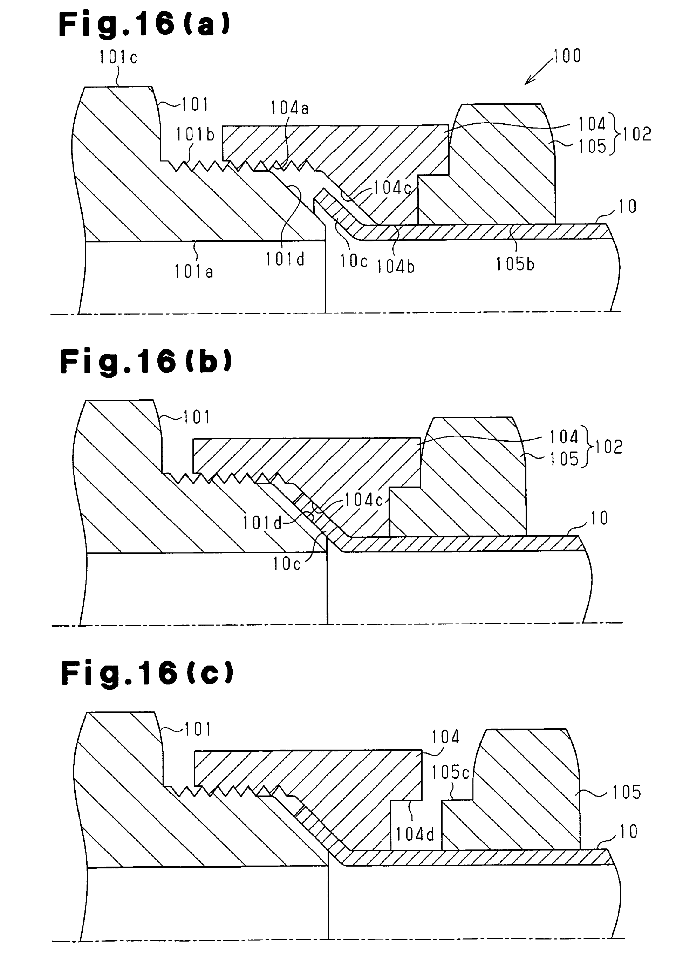

Figs. 16(a) to 16(c) are cross-sectional views of a pipe joint according to a tenth embodiment, wherein Fig. 16(a) illustrates a state before a pipe is connected, Fig. 16(b) illustrates a state where connection of the pipe is completed, and Fig. 16(c) illustrates a state where coupling of a holding part and a screw part is cancelled;

### BEST MODE FOR CARRYING OUT THE INVENTION

### (First Embodiment)

A first embodiment in which a pipe joint of the present invention is embodied will now be described with reference to Figs. 1 to 4. Fig. 1 is a partial cross-sectional view illustrating the configuration of a pipe joint 1. The pipe joint 1, for example, is a bite type joint for connecting a refrigerant pipe of a refrigeration device or a heat pump-type hot water device. The pipe joint 1 includes a joint body 11 to which a pipe 10 is connected and a nut 12 serving as a fastening member which is screwed to the joint body 11. A distal end 10a of the pipe 10 which is to be connected is inserted into a pipe connecting port 11a which is provided at one end in the axial direction of the joint body 11.

The pipe joint 1 has an annular ferrule 13 which bites into the outer circumferential surface of the pipe when the pipe is connected. The ferrule 13 is configured to be integrated with the nut 12 before connecting the pipe 10 and to be cut and separated from the nut 12 by screwing the nut 12 to the joint body 11. The front end 13a and the rear end 13b of the ferrule 13 bite into the outer circumferential surface 10b of the pipe 10 when an external thread portion of the nut 12 is screwed to an internal thread portion 11c of the joint body 11. Accordingly, the pipe 10 which is inserted into the joint body 11 is connected to the joint body 11. In the axial direction of the joint body 11, for example, a fixed pipe (not shown) is connected to an end portion located at the opposite side of an end portion to which the nut 12 is screwed. Accordingly, the state of communication between the fixed pipe and the pipe 10 is maintained.

The nut 12 includes a screw part 14 which connects the pipe 10 to the joint body 11 by being screwed to the joint body 11, and a holding part 15 which is held by a fastening tool, such as a spanner when screwing the nut 12. The screw part 14 and the holding part 15 are coupled to each other before the nut 12 is screwed to the joint body 11. The coupling of the holding part 15 and the screw part 14 is configured to be cancelled when the rotational torque of the holding part 15 reaches a predetermined value which is larger than the rotational torque at the time of completing the connection of the pipe 10 at the time of screwing the nut 12 to the joint body 11, that is, the coupling is cancelled after the connecting of the pipe 10 is completed. The configuration of the pipe joint 1 as configured above will now be described in detail.

Fig. 2 is a partial cross-sectional view illustrating the configuration of the joint body 11. The joint body 11 includes the pipe connecting port 11a into which the pipe 10 is inserted, an annular portion 11b which forms the pipe connecting port 11a, the internal thread portion 11c to which the external thread portion of the nut 12 is screwed, and a nut portion 11d which is formed at the outer circumference of the joint body 11.

The pipe connecting port 11a is formed into a circular hole and has a diameter that is substantially the same as the outer diameter of the pipe 10 which is inserted into the pipe connecting port 11a. A cam surface 11e is formed at the position corresponding to the entry part of the pipe connecting port 11a on the inner circumferential surface of the annular portion 11b The cam surface 11e is inclined so that the diameter becomes larger toward the nut 12. When the nut 12 is screwed to the joint body 11 and the ferrule 13 is pressed toward the joint body 11, the cam surface 11e guides the front end 13a of the ferrule 13 so as to bite into the outer circumferential surface 10b of the pipe 10. The internal thread portion 11c is formed at an inner wall 11f which is located outside of the annular portion 11b at the joint body 11. The nut portion 11d has a hexagonal planar shape and the joint body 11 is configured to be capable of being held by a tool, such as a spanner when screwing she nut 12.

Figs. 3(a) to 3(c) are partial cross-sectional views illustrating the configuration of the nut 12. Before the connecting operation of the pipe 10, the holding part 15 and the screw part 14 of the nut 12 are coupled to each other as illustrated in Fig. 3(a). The ferrule 13 is formed integrally with the screw part 14 at the inner circumference of the screw part 14 of the nut 12.

As illustrated in Fig. 3(b), the screw part 14 includes an external thread portion 14a which is screwed to the internal thread portion of the joint body 11, an inner wall 14b to which the ferrule 13 is connected, a retaining hole 14c which supports the outer circumferential surface 10b of the pipe 10, and a hole 14d to which the holding part 15 is coupled.

The external thread portion 14a is formed on the outer circumferential surface 14e of the screw part 14 that faces the joint body 11. The inner wall 14b is located at the inner circumference of a cylindrical portion which forms the outer circumferential surface 14e. The ferrule 13 is connected to the inner wall 14b with a thin-walled connecting portion 13e. The retaining hole 14c is formed at a position which faces the holding part 15 on the inner circumferential surface of the screw part 14. The retaining hole 14c is formed into a circular hole and has a diameter that is substantially the same as the outer diameter of the pipe 10 which is to be retained. A notch portion 14f which has a concave shape is formed on the circumferential surface of the retaining hole 14c. A pressing surface 14g which presses the ferrule 13 when the ferrule 13 bites into the pipe 10 is formed on the bottom surface of the notch portion 14f. In order to press the ferrule 13 inward along the radial direction of the screw part 14 when screwing the nut 12, the pressing surface 14g is inclined so that the diameter becomes larger toward the joint body 11. The hole 14d is formed at an end portion of the screw part 14 that faces the holding part 15. The hole 14d is formed to be substantially coaxial with the rotation axis of the nut 12 when screwing the nut 12 and has a predetermined depth.

The ferrule 13 is formed integrally with the nut 12 in order not to project outward of the nut 12. Thus, the ferrule 13 is prevented from being damaged during the handling of the nut 12. The ferrule 13 includes the front end 13a and rear end 13b which bite into the pipe 10, a close contact surface 13c which closely contacts the cam surface 11e of the joint body 11 when the front end 13a bites into the pipe 10, an inner circumferential surface 13d which faces the pipe 10, and the thin-walled connecting portion 13e which is connected to the inner wall 14b of the screw part 14.

The front end 13a is arranged at an end portion of the ferrule 13 that faces the joint body 11. The rear end 13b is provided at an end portion of the ferrule 13 that faces the notch portion 14f. The close contact surface 13c is inclined so that the diameter becomes smaller toward the joint body 11. The tilt angle of the close contact surface 13c is set to be smaller than the tilt angle of the cam surface 11e of the joint body 11. Accordingly, the front end 13a is guided toward the pipe 10 while contacting the cam surface 11e when the ferrule 13 is pressed toward the joint body 11.

The inner circumferential surface 13d configures a circular hole and the diameter of the circular hole is substantially the same as the outer diameter of the pipe 10. A recess 13f is formed on the inner circumferential surface 13d. When the ferrule 13 is pressed inward along the radial direction of the screw part 14 by screwing the nut 12, the ferrule 13 deforms into a shape substantially like a chevron and it becomes easy for the rear end 13b to bite into the pipe 10 due to the recess 13f.

The thin-walled connecting portion 13e is formed so as to extend outward along the radial direction of the screw part 14 from the end portion of the ferrule 13 that faces the notch portion 14f. The thickness of the thin-walled connecting portion 13e in the axial direction of the screw part 14 is set to be thin. Therefore, when the force along the axial direction of the screw part 14 is applied, the thin-walled connecting portion 13e is easily cut. The cut surface which is formed when the thin-walled connecting portion 13e is cut is configured to contact the pressing surface 14g of the screw part 14 by screwing the nut 12. Accordingly, the ferrule 13 is pressed inward along the radial direction of the screw part 14.

As illustrated in Fig. 3(c), the holding part 15 includes a nut portion 15a which is formed at the outer circumference of the holding part 15, a retaining hole 15b which supports the outer circumferential surface 10b of the pipe 10, and a shaft portion 15c which is coupled to the hole 14d of the screw part 14.

The nut portion 15a has a hexagonal planar shape and the nut 12 is configured to be capable of being held by a tool, such as a spanner when screwing the nut 12. The retaining hole 15b is formed into a circular hole which is coaxial with the holding part 15 and has a diameter that is substantially the same as the outer diameter of the supported pipe 10. The shaft portion 15c is projected toward the screw part 14 from the end portion which faces the screw part 14. The shaft portion 15c is formed to be substantially coaxial with the rotation axis of the nut 12 at the time when the nut 12 is screwed.

As illustrated in Fig. 3(a), the screw part 14 and the holding part 15 are coupled to each other by press-fitting the shaft portion 15c of the holding part 15 into the hole 14d of the screw part 14. That is, the screw part 14 and the holding part 15 are coupled by utilizing the frictional force at the contacting surfaces of the shaft portion 15c and the hole 14d. Then, when the rotational torque of the holding part 15 against the screw part 14 reaches a predetermined value, the contacting surfaces, that is, and the screw part 14 the holding part 15, start relative movement against the frictional force. Thus, the coupling of the holding part 15 and the screw part 14 is cancelled. The predetermined value of the rotational torque applied to the holding part 15 when the coupling of the holding part 15 and the screw part 14 is cancelled is set to be larger than the rotational torque when the connecting of the pipe 10 is completed by the rotation of the holding part 15. Therefore, after the connecting of the pipe 10 is completed by screwing the nut 12, the coupling of the holding part 15 and the screw part 14 is cancelled and the rotational torque of the holding part 15 is not transmitted to the screw part 14 any more. The predetermined value of the rotational torque is controlled by the frictional force between the outer circumferential surface of the shaft portion 15c and the circumferential surface of the hole 14d, that is, by the degree of the press-fitting of the shaft portion 15c into the hole 14d.

As mentioned above, when the connection of the pipe 10 is completed and the rotational torque of the holding part 15 reaches the predetermined value when screwing the nut 12 to the joint body 11, the coupling of the holding part 15 and the screw part 14 is cancelled. Therefore, the screwing of the joint body 11 and the screw part 14 becomes impossible to be loosened after the pipe 10 is connected.

Next, description will be given of a method for connecting the pipe 10 with the pipe joint 1 which is configured as mentioned above. Figs. 4(a) to 4(d) are cross-sectional views which illustrate the connecting processes for connecting the pipe 10 using the pipe joint 1 according to the first embodiment. In order to connect the pipe 10 to the joint body 11, first, the pipe 10 is inserted into the retaining hole 15b of the holding part 15 and the retaining hole 14c of the screw part 14, and then, the distal end 10a of the pipe 10 is inserted into the pipe connecting port 11a of the joint body 11. Then, the holding part 15 is rotated in the state where the nut portion 11d of the joint body 11 is held. Accordingly, as illustrated in Fig. 4(a), the external thread 14a of the screw part 14 is screwed to the internal thread portion 11c of the joint body 11.

The front end 13a of the ferrule 13 contacts the cam surface 11e of the joint body 11 in accordance with the screwing of the nut 12 and the pressing force of the front end 13a to the cam surface 11e becomes large in accordance with the screwing of the nut 12. Accordingly, the shearing force applied to the thin-walled connecting portion 13e of the ferrule 13 along the axial direction of the pipe joint 1 becomes large and the thin-walled connecting portion 13e is cut. As illustrated in Fig. 4(b), the ferrule 13 is separated from the screw part 14 of the nut 12 due to the cut of the thin-walled connecting portion 13e of the ferrule 13.

When the holding part 15 is continuously rotated and the nut 12 is screwed, the pressing surface 14g of the screw part 14 contacts a sheared surface 13g of the ferrule 13 generated by the cut of the thin-walled connecting portion 13e while the front end 13a of the ferrule 13 contacts the cam surface 11e of the joint body 11. In accordance with the screwing of the nut 12, the ferrule 13 receives the pressing force from the pressing surface 14g and the front end 13a of the ferrule 13 bites into the outer circumferential surface 10b of the pipe 10, while being guided by the cam surface 11e, as illustrated in Fig. 4(c). At the same time, the rear end 13b including the sheared surface 13g of the ferrule 13 bites into the outer circumferential surface 10b of the pipe 10 while rotating in the clockwise direction in Fig. 4(c) due to the pressing force from the pressing surface 14g which is directed inward along the radial direction of the screw part 14.

With the above-mentioned biting of the front end 13a and the rear end 13b of the ferrule 13 into the outer circumferential surface 10b of the pipe 10, the connection of the pipe 10 to the joint body 11 is completed. At that time, the boundary between the front end 13a of the ferrule 13 and the outer circumferential surface 10b of the pipe 10 and the boundary between the close contact surface 13c of the ferrule 13 and the cam surface 11e of the joint body 11 are sealed so that the sealing performance at the connecting portion of the pipe 10 is ensured. Since the rear end 13b of the ferrule 13 bites into the outer circumferential surface 10b of the pipe 10, the pipe 10 is held more firmly.

When the holding part 15 further rotates after completing the connection of the pipe 10, the rotational torque of the holding part 15 becomes large and reaches the predetermined value since the nut 12 has already been fastened. Accordingly, the coupling of the shaft portion 15c of the holding part 15 and the hole 14d of the screw part 14 is cancelled. Then, as illustrated in Fig. 4(d), the holding part 15 comes off the screw part 14. Therefore, it becomes impossible to loosen the screwing of the joint body 11 and the screw part 14 with a general fastening tool, such as a spanner. Consequently, the fastened state of the joint body 11 and the screw part 14 is maintained.

The pipe joint 1 according to the first embodiment has the following advantages.
(1) The nut 12 according to the first embodiment includes the screw part 14 which is screwed to the joint body 11 and connects the pipe 10 to the joint body 11 and the holding part 15 which is held by a fastening tool when screwing the nut 12. Before the nut 12 is screwed to the joint body 11, the screw part 14 and the holding part 15 are coupled to each other. At the time of screwing the nut 12 to the joint body 11, the coupling of the holding part 15 and the screw part 14 is cancelled when the rotational torque of the holding part 15 reaches the predetermined value which is larger than the rotational torque at the time of completing the connection of the pipe 10, that is, the coupling is cancelled after the connection of the pipe 10 is completed. Therefore, after the pipe 10 is connected, the rotational torque of the holding part 15 is not transmitted to the screw part 14 any more. Therefore, it becomes impossible to easily loosen the screwing of the joint body 11 and the screw part 14 and to easily remove the pipe 10 after loosening the screwing by using a general fastening tool against the pipe joint 1 to which the pipe 10 has already once connected. As a result, the pipe joint 1 according to the present embodiment prevents improper discharge of refrigerant gas into the atmosphere and conforms to chlorofluorocarbon gas regulations.
(2) In the first embodiment, the holding part 15 and the screw part 14 which configures the nut 12 are coupled by utilizing the frictional force at the contacting surfaces of both parts. The holding part 15 and the screw part 14 start relative movement against the frictional force when the rotational torque of the holding part 15 reaches the predetermined value which is larger than the rotational torque at the time when the connecting of the pipe 10 is completed. Thus, the coupling of the holding part 15 and the screw part 14 is cancelled. Therefore, after the pipe 10 is connected, the rotational torque of the holding part 15 is not transmitted to the screw part 14 any more. Therefore, it becomes impossible to easily loosen the screwing of the joint body 11 and the screw part 14 in the state where the pipe 10 is connected, and improper discharge of refrigerant gas is prevented. Further, it becomes possible to adjust the rotational torque which cancels the coupling by adjusting the friction coefficient at the contacting surfaces of the holding part 15 and the screw part 14 so as to alter the frictional force, for example.
(3) In the first embodiment, the holding part 15 and the screw part 14 which configures the nut 12 are coupled by press-fitting the shaft portion 15c of the holding part 15 into the hole 14d of the screw part 14. Therefore, it is possible to control the frictional force between the outer circumferential surface of the shaft portion 15c and the circumferential surface of the hole 14d by the degree of the press-fitting of the shaft portion 15c into the hole 14d. Thus, it becomes possible to easily adjust the rotational torque for cancelling the coupling of the holding part 15 and the screw part 14.
(4) The pipe joint 1 according to the first embodiment has the annular ferrule 13 which deforms toward the pipe 10 by the contact with the cam surface 11e when screwing the nut 12 to the joint body 11. The pipe 10 is connected to the joint body 11 by the biting of the ferrule 13 into the outer circumferential surface 10b of the pipe 10. Even with such a bite type pipe joint having the ferrule 13 which is configured as mentioned above, by cancelling the coupling of the screw part 14 and the holding part 15 after completing the connection of the pipe 10, it becomes impossible to easily loosen the screwing of the joint body 11 and the screw part 14 in the state where the pipe 10 is connected.
(5) The ferrule 13 according to the first embodiment is formed integrally with the screw part 14 of the nut 12. Therefore, the ferrule 13 does not need to be assembled individually when connecting the pipe 10 and the workability is improved. In addition, the ferrule 13, which is a relatively small part, is prevented from being lost before connecting the pipe 10.

### (Second Embodiment)

Next, a second embodiment in which a pipe joint of the present invention is embodied will now be described with reference to Figs. 5(a) to 6(d). The second to fourth embodiments, which will be described below, are different from the first embodiment only in the aspect of the coupling of the holding part and the screw part which configures the nut. The configuration of the joint body and the nut for connecting the pipe is the same as in the first embodiment. Accordingly, in the following description of the second to fourth embodiments, description of the same configuration as in the first embodiment is omitted or simplified.

The pipe joint 2 according to the second embodiment includes a joint body 21 into which the pipe 10 is inserted and a nut 22 serving as a fastening member which is screwed to the joint body 21. The joint body 21 has the same shape as the joint body 11 according to the first embodiment. The nut 22 includes a screw part 24 which connects the pipe 10 to the joint body 21 by being screwed to the joint body 21, and a holding part 25 which is held by a fastening tool, such as a spanner when screwing the nut 22.

Figs. 5(a) to 5(c) are partial cross-sectional views illustrating the configuration of the nut 22. Before the connecting operation of the pipe 10, the screw part 24 of the nut 22 and the holding part 25 are coupled to each other, as illustrated in Fig. 5(a). A ferrule 23 is formed integrally with the screw part 24 on the inner circumferential surface of the screw part 24 of the nut 22.

As illustrated in Fig. 5(b), the screw part 24 includes an external thread portion 24a which is screwed to an internal thread portion of the joint body and an internal thread portion 24d which is coupled to the holding part 25. The internal thread portion 24d is formed at an end portion of the screw part 24 that faces the holding part 25 so as to be substantially coaxial with the rotation axis of the nut 22 when screwing the nut 22 and is formed to have a predetermined depth. The thread groove of the internal thread portion 24d is formed so that the rotation direction of the holding part 25 for the screwing of the screw part 24 and the holding part 25 faces the rotation direction of the screw part 24 for the screwing of the screw part 24 and the joint body 21. That is, the external thread portion 24a is formed as right-hand thread and the internal thread portion 24d is formed as left-hand thread.

As illustrated in Fig. 5(c), the holding part 25 has an external thread portion 25c which is screwed to the internal thread portion 24d of the screw part 24. The external thread portion 25c is formed so as to project toward the screw part 24 from an end portion of the holding part 25 that faces the screw part 24, and to be substantially coaxial with the rotation axis of the nut 22 when screwing the nut 22. The external thread portion 25c is formed as left-hand thread like the internal thread portion 24d of the screw part 24.

As illustrated in Fig. 5(a), the screw part 24 and the holding part 25 are coupled to each other by screwing the external thread portion 25c of the holding part 25 to the internal thread portion 24d of the screw part 24. The internal thread portion 21c of the joint body 21 and the external thread portion 24a of the screw part 24 configure a first screw portion. The external thread portion 25c of the holding part 25 and the internal thread portion 24d of the screw part 24 configure a second screw portion. In Figs. 5(b) and 5(c), the first screw portion is configured as right-hand thread and the second screw portion is configured as left-hand thread. However, the first screw portion may be configured as left-hand thread, and the second screw portion may be configured as right-hand thread.

The screwing of the external thread portion 25c of the holding part 25 and the internal thread portion 24d of the screw part 24 at the second screw portion is configured to be loosened when the rotational torque in the direction of loosening the screwing of the holding part 25 to the screw part 24 reaches a predetermined value so that the coupling of the screw part 24 and the holding part 25 is cancelled. The predetermined value of the rotational torque which is applied to the holding part 25 when the screwing of the holding part 25 and the screw part 24 at the second screw portion is loosened is set to be larger than the rotational torque when the connection of the pipe 10 is completed by the rotation of the holding part 25. Therefore, after the connection of the pipe 10 is completed by the screwing of the nut 22, the coupling of the holding part 25 and the screw part 24 is cancelled and the rotational torque of the holding part 25 is not transmitted to the screw part 24 any more.

In this manner, when the rotational torque of the holding part 25 reaches the predetermined value by further rotating the holding part 25 in the same direction after the connection of the pipe 10 is completed by the screwing of the joint body 21 and the nut 22 at the first screw portion when screwing the nut 22 to the joint body 21, the screwing of the holding part 25 and the screw part 24 at the second screw portion is loosened, and the coupling of the holding part 25 and the screw part 24 is cancelled. Therefore, after the pipe 10 is connected, loosening of the screwing of the joint body 21 and the screw part 24 is prevented.

Next, description will be given of a method for connecting the pipe 10 with the pipe joint 2 which is configured as mentioned above. Figs. 6(a) to 6(d) are cross-sectional views which illustrate the connecting processes for connecting the pipe 10 using the pipe joint 2 according to the second embodiment. In order to connect the pipe 10 to the joint body 21, first, the pipe 10 is inserted into a retaining hole 25b of the holding part 25 and a retaining hole 24c of the screw part 24, and then, the distal end 10a of the pipe 10 is inserted into the pipe connecting port 21a of the joint body 21. Then, a holding part 25 is rotated in the state where a nut portion 21d of the joint body 21 is held. Accordingly, as illustrated in Fig. 6(a), the external thread portion 24a of the screw part 24 is screwed to the internal thread portion 21c of the joint body 21.

The front end 23a of the ferrule 23 contacts a cam surface 21e of the joint body 21 in accordance with the screwing of the nut 22, and the pressing force of the front end 23a to the cam surface 21e becomes large in accordance with the screwing of the nut 22. Accordingly, a thin-walled connecting portion 23e of the ferrule 23 is cut and the ferrule 23 is separated from the screw part 24, as illustrated in Fig. 6(b).

When the holding part 25 is continuously rotated and the nut 22 is screwed, a pressing surface 24g of the screw part 24 contacts a cut surface 23g of the ferrule 23 generated by the cut of the thin-walled connecting portion 23e, while the front end 23a of the ferrule 23 contacts the cam surface 21e of the joint body 21. In accordance with the screwing of the nut 22, the ferrule 23 receives the pressing force from the pressing surface 24g, and the front end 23a of the ferrule 23 bites into the outer circumferential surface 10b of the pipe 10, while being guided by the cam surface 21e, as illustrated in Fig. 6(c). At the same time, the rear end 23b of the ferrule 23 bites into the outer circumferential surface 10b of the pipe 10 due to the pressing force from the pressing surface 24g which is directed inward along the radial direction of the screw part 24, as illustrated in Fig. 6(c).

With the above-mentioned biting of the front end 23a and the rear end 23b of the ferrule 23 into the outer circumferential surface 10b of the pipe 10, the pipe joint 2 connects the pipe 10 to the joint body 21 while ensuring the sealing performance at the connecting portion of the pipe 10. When the holding part 25 further rotates after completing the connection of the pipe 10, the rotational torque of the holding part 25 becomes large and reaches the predetermined value since the nut 22 has already been fastened.
Accordingly, the screwing of the external thread portion 25c of the holding part 25 and the internal thread portion 24d of the screw part 24 is loosened, and the holding part 25 comes off the screw part 24, as illustrated in Fig. 6(d).
Therefore, it becomes impossible to loosen the screwing of the joint body 21 and the screw part 24 with a general fastening tool, such as a spanner. Consequently, the fastened state of the joint body 21 and the screw part 24 is maintained.

The pipe joint 2 according to the second embodiment has the following advantage in addition to the advantages (1), (4) and (5) of the first embodiment.
(6) The holding part 25 and the screw part 24 which configure the nut 22 according to the second embodiment are coupled to each other by the screwing of the holding part 25 and the screw part 24 at the second screw portion. The rotation direction of the holding part 25 for the screwing of the screw part 24 and the holding part 25 is set to be the reverse direction of the rotation direction of the screw part 24 for the screwing the screw part 24 and the joint body 21. When the rotational torque of the holding part 25 reaches the predetermined value by further rotating the holding part 25 in the same direction after the connection of the pipe 10 is completed by the screwing of the joint body 21 and the nut 22 with the first screw portion when screwing the nut 22 to the joint body 21, the screwing of the screw part 24 and the holding part 25 with the second screw portion is loosened, and the coupling of the holding part 25 and the screw part 24 is cancelled. Thus, by the rotation of the holding part 25 in the same direction after the pipe 10 is connected, the screwing of the screw part 24 and the holding part 25 with the second screw portion is loosened, and the holding part 25 can be removed from the screw part 24. Then, the rotational torque of the holding part 25 is not transmitted to the screw part 24 any more. Therefore, it becomes impossible to easily loosen the screwing of the joint body 21 and the screw part 24 with the first screw portion in the state where the pipe 10 is connected, and improper discharge of refrigerant gas is prevented.

### (Third Embodiment)

Next, a third embodiment in which a pipe joint of the present invention is embodied will now be described with reference to Figs. 7(a) to 8(d). The pipe joint 3 according to the third embodiment includes a joint body 31 into which the pipe 10 is inserted and a nut 32 serving as a fastening member which is screwed to the joint body 31. The joint body 31 has the same shape as the joint body 11 according to the first embodiment. The nut 32 includes a screw part 34 which connects the pipe 10 to the joint body 31 by being screwed to the joint body 31, and a holding part 35 which is held by a fastening tool, such as a spanner when screwing the nut 32.

Figs. 7(a) to 7(c) are partial cross-sectional views illustrating the configuration of the nut 32. Before the connecting operation of the pipe 10, the screw part 34 and the holding part 35 are coupled to each other, as illustrated in Fig. 7(a). A ferrule 33 is formed integrally with the screw part 34 on the inner circumferential surface of the screw part 34 of the nut 32.

As illustrated in Fig. 7(b), the screw part 34 includes an external thread portion 34a which is screwed to an internal thread portion of the joint body and an internal thread portion 34d which is coupled to the holding part 35. The internal thread portion 34d is formed at an end portion of the screw part 34 that faces the holding part 35 so as to be substantially coaxial with the rotation axis of the nut 32 when screwing the nut 32, and is formed to have a predetermined shape. The thread groove of the internal thread portion 34d is formed so that the rotation direction of the holding part 25 for screwing the screw part 24 and the holding part 25 is the same as the rotation direction of the screw part 34 for screwing the screw part 34 and the joint body 31. That is, both of the external thread portion 24a and the internal thread portion 24d are formed as right-hand thread.

As illustrated in Fig. 7(c), the holding part 35 has an external thread portion 35c which is screwed to the internal thread portion 34d of the screw part 34. The external thread portion 35c is formed so as to project toward the screw part 34 from an end portion of the holding part 35 that faces the screw part 34 and to be substantially coaxial with the rotation axis of the nut 32 when screwing the nut 32. The external thread portion 35c is formed as right-hand thread like the internal thread portion 34d of the screw part 34.

As illustrated in Fig. 7(a), the holding part 35 and the screw part 34 are coupled to each other by screwing the external thread portion 35c of the holding part 35 to the internal thread portion 34d of the screw part 34. The internal thread portion 31c of the joint body 31 and the external thread portion 34a of the screw part 34 configure a third screw portion. The external thread portion 35c of the holding part 35 and the internal thread portion 34d of the screw part 34 configure a fourth screw portion. In Figs. 7(b) and 7(c), both of the third screw portion and the fourth screw portion are configured as right-hand thread. However, both of the third screw portion and fourth screw portion may be configured as left-hand thread.

The fourth screw portion is configured to be broken so as to cancel the coupling of the screw part 34 and the holding part 35 when the rotational torque in the direction in which the holding part 35 is fastened to the screw part 34 in the process of screwing the holding part 35 to the screw part 34. The predetermined value of the rotational torque which is applied to the holding part 35 when the fourth screw portion is broken is set to be larger than the rotational torque when the connection of the pipe 10 is completed by the rotation of the holding part 35. Therefore, after the connection of the pipe 10 is completed by the screwing of the nut 32, the coupling of the holding part 35 and the screw part 34 is cancelled and the rotational torque of the holding part 35 is not transmitted to the screw part 34 any more. The breaking site at the fourth screw portion may be only the external thread portion 35c of the holding part 35, only the internal thread portion 34d of the screw part 34, or both of the external thread portion 35c and the internal thread portion 34d.

In this manner, when the rotational torque of the holding part 35 reaches the predetermined value after the connection of the pipe 10 is completed by the screwing of the joint body 31 and the nut 32 at the third screw portion when screwing the nut 32 to the joint body 31, the fourth screw portion is broken, and the coupling of the holding part 35 and the screw part 34 is cancelled. Therefore, after the pipe 10 is connected, loosening the screwing of the joint body 31 and the screw part 34 is prevented.

Next, description will be given of a method for connecting the pipe 10 using the pipe joint 3 which is configured as mentioned above. Figs. 8(a) to 8(d) are cross-sectional views which illustrate the connecting processes for connecting the pipe 10 using the pipe joint 3 according to the third embodiment. In order to connect the pipe 10 to the joint body 31, first, the pipe 10 is inserted into a retaining hole 35b of the holding part 35 and a retaining hole 34c of the screw part 34, and then, the distal end 10a of the pipe 10 is inserted into a pipe connecting port 31a of the joint body 31. Then, the holding part 35 is rotated in the state where a nut portion 31d of the joint body 31 is held. Accordingly, as illustrated in Fig. 8(a), the external thread portion 34a of the screw part 34 is screwed to the internal thread portion 31c of the joint body 31.

The front end 33a of the ferrule 33 contacts a cam surface 31e of the joint body 31, and the pressing force of the front end 33a to the cam surface 31e becomes large in accordance with the screwing of the nut 32. Accordingly, a thin-walled connecting portion 33e of the ferrule 33 is cut and the ferrule 33 is separated from the screw part 34, as illustrated in Fig. 8(b).

When the nut 32 is continuously screwed, a pressing surface 34g of the screw part 34 contacts a cut surface 33g of the ferrule 33 while the front end 33a of the ferrule 33 contacts the cam surface 31e of the joint body 31. In accordance with the screwing of the nut 32, the ferrule 33 receives the pressing force from the pressing surface 34g and the front end 33a of the ferrule 33 bites into the outer circumferential surface 10b of the pipe 10, while being guided by the cam surface 31e, as illustrated in Fig. 8(c). At the same time, the rear end 33b of the ferrule 33 bites into the outer circumferential surface 10b of the pipe 10 due to the pressing force from the pressing surface 34g which is directed inward along the radial direction of the screw part 34, as illustrated in Fig. 8(c).

With the above-mentioned biting of the front end 33a and the rear end 33b of the ferrule 33 into the outer circumferential surface 10b of the pipe 10, the pipe joint 3 connects the pipe 10 to the joint body 31 while ensuring the sealing performance at the connecting portion of the pipe 10. When the holding part 35 further rotates after completing the connection of the pipe 10, the rotational torque of the holding part 35 becomes large and reaches the predetermined value since the nut 32 has already been fastened. Accordingly, the fourth screw portion, that is, the external thread portion 35c of the holding part 35 and the internal thread portion 34d of the screw part 34, is broken and the holding part 35 comes off the screw part 34, as illustrated in Fig. 8(d). Therefore, it becomes impossible to loosen the screwing of the joint body 31 and the screw part 34 with a general fastening tool, such as a spanner. Consequently, the fastened state of the joint body 31 and the screw part 34 is maintained.

The pipe joint 3 according to the third embodiment has the following advantage in addition to the advantages (1), (4) and (5) of the first embodiment.
(7) The holding part 35 and the screw part 34 which configure the nut 32 according to the third embodiment are coupled to each other by the screwing of the holding part 35 and the screw part 34 at the fourth screw portion. The rotation direction of the holding part 35 for the screwing of the screw part 34 and the holding part 35 is set to be the same as the rotation direction of the screw part 34 for the screwing of the screw part 34 and the joint body 31. When the rotational torque of the holding part 35 reaches the predetermined value after the connection of the pipe 10 is completed by the screwing of the joint body 31 and the nut 32 at the third screw portion when screwing the nut 32 to the joint body 31, the fourth screw portion is broken, and the coupling of the holding part 35 and the screw part 34 is cancelled. Accordingly, the rotational torque of the holding part 35 is not transmitted to the screw part 34 any more after the pipe 10 is connected. Therefore, it becomes impossible to easily loosen the screwing of the joint body 31 and the screw part 34 at the third screw portion in the state where the pipe 10 is connected, and improper discharge of refrigerant gas is prevented.

### (Fourth Embodiment)

Next, a fourth embodiment in which a pipe joint of the present invention is embodied will now be described with reference to Figs. 9(a) to 10(d). The pipe joint 4 according to the fourth embodiment includes a joint body 41 into which the pipe 10 is inserted and a nut 42 serving as a fastening member which is screwed to the joint body 41. The joint body 41 has the same shape as the joint body 11 according to the first embodiment. The nut 42 includes a screw part 44 which connects the pipe 10 to the joint body 41 by being screwed to the joint body 41, and a holding part 45 which is held by a fastening tool, such as a spanner when screwing the nut 42.

Fig. 9(a) is a partial cross-sectional view illustrating the configuration of the nut 42. Before the connecting operation of the pipe 10, the holding part 45 and the screw part 44 are coupled to each other, as illustrated in Fig. 9(a). A ferrule 43 is formed integrally with the screw part 44 on the inner circumferential surface of the screw part 44 of the nut 42.

The holding part 45 is made of resin and is provided at an end portion of the nut 42 in the axial direction at the opposite side of an end portion which faces the joint body 41. Fig. 9(b) is a cross-sectional view at line 9b-9b in Fig. 9(a). The screw part 44 and the holding part 45 are coupled to each other by fixing a hole 45d which is formed at the inner circumference of the holding part 45 to a shaft portion 44h which is formed at the outer circumference of the screw part 44 by adhesion, press-fitting and the like. A nut portion 45a is formed at the outer circumference of the holding part 45. The nut portion 45a has a hexagonal planar shape and the nut 42 is configured to be capable of being held by a tool, such as a spanner when screwing the nut 42 to the joint body 41.

The holding part 45 which is made of resin is configured to be broken when the rotational torque applied to the holding part 45 reaches a predetermined value. The state where the holding part 45 is broken refers to the state where the holding part 45 is damaged to an extent that it is no longer possible to be rotated with a tool, such as a spanner and comes off the screw part 44. The predetermined value of the rotational torque which is applied when the holding part 45 is broken is set to be larger than the rotational torque when the connection of the pipe 10 due to the rotation of the holding part 45 is completed. Accordingly, after the connection of the pipe 10 is completed by screwing the nut 42, the holding part 45 is broken and the rotational torque is not transmitted to the screw part 44 any more.

In this manner, when the rotational torque of the holding part 45 reaches the predetermined value after the connection of the pipe 10 is completed at the time of screwing the nut 42 to the joint body 41, the holding part 45 is broken and the coupling of the holding part 45 and the screw part 44 is cancelled. Therefore, after the pipe 10 is connected, loosening the screwing of the joint body 41 and the screw part 44 is prevented.

Next, description will be given of a method for connecting the pipe 10 using the pipe joint 4 which is configured as mentioned above. Figs. 10(a) to 10(d) are cross-sectional views which illustrate the connecting processes for connecting the pipe 10 using the pipe joint 4 according to the fourth embodiment. In order to connect the pipe 10 to the joint body 41, first, the pipe 10 is inserted into a retaining hole 44c of the screw part 44, and then, the distal end 10a of the pipe 10 is inserted into a pipe connecting port 41a of the joint body 41. Then, the holding part 45 is rotated in the state where a nut portion 41d of the joint body 41 is held. Accordingly, as illustrated in Fig. 10(a), an external thread 44a of the screw part 44 is screwed to an internal thread portion 41c of the joint body 41.

The front end 43a of the ferrule 33 contacts a cam surface 41e of the joint body 41 in accordance with the screwing of the nut 42, and the pressing force of the front end 43a to the cam surface 41e becomes large in accordance with the screwing of the nut 42. Accordingly, a thin-walled connecting portion 43e of the ferrule 43 is cut and the ferrule 43 is separated from the screw part 44, as illustrated in Fig. 10(b).

When the nut 42 is continuously screwed, a pressing surface 44g of the screw part 44 contacts a cut surface 43g of the ferrule 33 while the front end 43a of the ferrule 43 contacts the cam surface 41e of the joint body 41. In accordance with the screwing of the nut 42, the ferrule 43 receives the pressing force from the pressing surface 44g and the front end 43a of the ferrule 43 bites into the outer circumferential surface 10b of the pipe 10, while being guided by the cam surface 41e, as illustrated in Fig. 10(c). At the same time, the rear end 43b of the ferrule 43 bites into the outer circumferential surface 10b of the pipe 10 due to the pressing force from the pressing surface 44g which is directed inward along the radial direction of the screw part 44, as illustrated in Fig. 10(c).

With the above-mentioned biting of the front end 43a and the rear end 43b of the ferrule 43 into the outer circumferential surface 10b of the pipe 10, the pipe joint 4 connects the pipe 10 to the joint body 41 while ensuring the sealing performance at the connecting portion of the pipe 10. When the holding part 45 further rotates after completing the connection of the pipe 10, the rotational torque of the holding part 45 becomes large and reaches the predetermined value since the nut 42 has already been fastened. Accordingly, the holding part 45 is broken and comes off the screw part 44, as illustrated in Fig. 10(d). Therefore, it becomes impossible to loosen the screwing of the joint body 41 and the screw part 44 with a general fastening tool, such as a spanner. Consequently, the fastened state of the joint body 41 and the screw part 44 is maintained.

The pipe joint 4 according to the fourth embodiment has the following advantages in addition to the advantages (1), (4) and (5) of the first embodiment.
(8) In the fourth embodiment, when the rotational torque of the holding part 45 reaches the predetermined value after the connection of the pipe 10 is completed when screwing the nut 42 to the joint body 41, the holding part 45 is broken, and the coupling of the holding part 45 and the screw part 44 is cancelled. Accordingly, the rotational torque of the holding part 45 is not transmitted tc the screw part 44 any more. Therefore, it becomes impossible to easily loosen the screwing of the joint body 41 and the screw part 44 in the state where the pipe 10 is connected, and improper discharge of refrigerant gas is prevented.
(9) The holding part 45 according to the fourth embodiment is made of resin. Therefore, the holding part 45 is capable of being broken easily by receiving the rotational torque which is above the predetermined value from a fastening tool, such as a spanner.

### (Fifth Embodiment)

Next, a fifth embodiment in which a pipe joint of the present invention is embodied will now be described with reference to Figs. 11(a) to 11(d). The fifth embodiment is the same as the first embodiment in that the ferrule is provided integrally with the nut, that the separated ferrule bites into the outer circumferential surface of the pipe due to the screwing of the nut, and that the screw part and the holding part are coupled to each other. The fifth embodiment is different from the first embodiment in that the configuration of the pipe joint is simplified. In the following description of the embodiment, description of the same configuration as in the first embodiment is omitted or simplified.

Figs. 11(a) to 11(d) are cross-sectional views which illustrate the connecting processes for connecting the pipe using the pipe joint 5 according to the fifth embodiment. Fig. 11(a) illustrates the configuration of the pipe joint 5 before the pipe 10 is connected. The pipe joint 5 includes a joint body 51 into which the pipe 10 is inserted and a nut 52 serving as a fastening member which is screwed to the joint body 51. The nut 52 includes a screw part 54 which connects the pipe 10 to the joint body 51 by being screwed to the joint body 51, and a holding part 55 which is held by a fastening tool, such as a spanner when screwing the nut 52. As in the first embodiment, the holding part 55 and the screw part 54 are configured so that the coupling thereof is cancelled when the rotational torque of the holding part 55 reaches a predetermined value which is larger than the rotational torque at the time of completing the connection of the pipe 10, that is, after the connection of the pipe 10 is completed. An annular ferrule 53 which bites into the outer circumferential surface of the pipe 10 when connecting the pipe 10 is formed integrally with the screw part 54 of the nut 52.

The slit which is formed between the annular portion 11b and the inner wall 11f of the joint body 11 according to the first embodiment is omitted in the joint body 51 of the pipe joint 5. Namely, as illustrated in Fig. 11(a), an internal thread portion 51c is formed at a position adjacent to a cam surface 51e in the axial direction of the joint body 11. The cylindrical portion which is formed at the screw part 14 according to the first embodiment extending from the thin-walled connecting portion 13e of the ferrule 13 toward the joint body 11 is omitted in the screw part 54 of the nut 52. That is, as illustrated in Fig. 11(a), a ferrule 53 is arranged so as to project outward from the nut 52 along the axial direction. With this configuration, the shapes of the joint body 51 and the nut 52 are possible to be simplified. Therefore, the machining of the part is possible to be simplified and the pipe joint 5 is possible to be compact easily in both the radial direction and the axial direction.

Next, description will be given of a method for connecting the pipe 10 using the pipe joint 5 which is configured as mentioned above. In order to connect the pipe 10 to the joint body 51, first, the pipe 10 is inserted into a retaining hole 55b of the holding part 55 and a retaining hole 54c of the screw part 54, and then, the distal end 10a of the pipe 10 is inserted into a pipe connecting port 51a of the joint body 51. Then, the holding part 55 is rotated in the state where a nut portion 51d of the joint body 51 is held. Accordingly, as illustrated in Fig. 11(a), an external thread portion 54a of the screw part 54 is screwed to an internal thread portion 51c of the joint body 51.

The front end 53a of the ferrule 53 contacts a cam surface 51e of the joint body 51 in accordance with the screwing of the nut 52, and the pressing force of the front end 53a to the cam surface 51e becomes large in accordance with the screwing of the nut 52. Accordingly, a thin-walled connecting portion 53e of the ferrule 53 is cut and the ferrule 53 is separated from the screw part 54 of the nut 52, as illustrated in Fig. 11(b).

When the holding part 55 is continuously rotated and the nut 52 is screwed, a pressing surface 54g of the screw part 54 contacts a cut surface 53g of the ferrule 53 generated by the cut of the thin-walled connecting portion 53e while the front end 53a of the ferrule 53 contacts the cam surface 51e of the joint body 51. In accordance with the screwing of the nut 52, the ferrule 53 receives the pressing force from the pressing surface 54g and the front end 53a of the ferrule 53 bites into the outer circumferential surface 10b of the pipe 10, while being guided by the cam surface 51e, as illustrated in Fig. 11(c). At the same time, the rear end 53b of the ferrule 53 bites into the outer circumferential surface 10b of the pipe 10 due to the pressing force from the pressing surface 54g which is directed inward along the radial direction of the screw part 54, as illustrated in Fig. 11(c).

With the above-mentioned biting of the front end 53a and the rear end 53b of the ferrule 53 into the outer circumferential surface 10b of the pipe 10, the pipe joint 5 connects the pipe 10 to the joint body 51 while ensuring the sealing performance at the connecting portion of the pipe 10. When the holding part 55 further rotates after completing the connection of the pipe 10, the rotational torque of the holding part 55 becomes large and reaches the predetermined value since the nut 52 has already been fastened. Accordingly, the coupling of a shaft portion 55c of the holding part 55 and a hole 54d of the screw part 54 is cancelled. Then, as illustrated in Fig. 11(d), the holding part 55 comes off the screw part 54. Therefore, it becomes impossible to loosen the screwing of the joint body 51 and the screw part 54 with a general fastening tool, such as a spanner. Consequently, the fastened state of the joint body 51 and the screw part 54 is maintained.

Thus, the pipe joint 5 according to the fifth embodiment has the same advantages as the advantages (1) to (5) of the first embodiment. Further, since the configuration of the pipe joint 5 according to the fifth embodiment is more simplified compared with the pipe joint 1 according to the first embodiment, it is possible to make the pipe joint more compact.

### (Sixth Embodiment)

Next, a sixth embodiment in which a pipe joint of the present invention is embodied will now be described with reference to Figs. 12(a) to 12(d). The sixth embodiment is the same as the first embodiment in that the ferrule is provided integrally with the nut, that the separated ferrule bites into the outer circumferential surface of the pipe due to the screwing of the nut, and that the screw part and the holding part are coupled to each other. The sixth embodiment is different from the first embodiment in that the external thread portion is formed at the joint body and the internal thread portion is formed at the nut. In the following description of the embodiment, description of the same configuration as in the first embodiment is omitted or simplified.

Figs. 12(a) to 12(d) are cross-sectional views which illustrate the connecting processes for connecting the pipe using the pipe joint 6 according to the sixth embodiment. Fig. 12(a) illustrates the configuration of the pipe joint 6 before the pipe 10 is connected. The pipe joint 6 includes a joint body 61 into which the pipe 10 is inserted and a nut 62 serving as a fastening member which is screwed to the joint body 61. The nut 62 includes a screw part 64 which connects the pipe 10 to the joint body 61 by being screwed to the joint body 61, and a holding part 65 which is held by a fastening tool, such as a spanner when screwing the nut 62. As in the first embodiment, the holding part 65 and the screw part 64 are configured so that the coupling thereof is cancelled when the rotational torque of the holding part 65 reaches a predetermined value which is larger than the rotational torque at the time of completing the connection of the pipe 10. An annular ferrule 63 which bites into the outer circumferential surface of the pipe 10 when connecting the pipe 10 is formed integrally with the screw part 64 of the nut 62.

At the joint body 61 of the pipe joint 6, an external thread portion 61c is provided instead of the internal thread portion 11c of the joint body 11 according to the first embodiment. The external thread portion 61c is formed at the outer circumferential surface of an annular portion 61b which forms a pipe connecting port 61a. Accordingly, the cylindrical portion which is formed outside of the annular portion 11b of the joint body 11 according to the first embodiment is omitted. At the screw part 64 of the nut 62, an internal thread portion 64a is provided instead of the external thread portion 14a of the screw part 14 according to the first embodiment. The internal thread portion 64a is formed on the inner wall 64b to which the ferrule 63 is coupled. The joint body 61 and the nut 62 are fastened by the screwing of the external thread portion 61c and the internal thread portion 64a.

Next, description will be given of a method for connecting the pipe 10 using the pipe joint 6 which is configured as mentioned above. In order to connect the pipe 10 to the joint body 61, first, the pipe 10 is inserted into a retaining hole 65b of the holding part 65 and a retaining hole 64c of the screw part 64, and then, the distal end 10a of the pipe 10 is inserted into a pipe connecting port 61a of the joint body 61. Then, the holding part 65 is rotated in the state where a nut portion 61d of the joint body 61 is held. Accordingly, as illustrated in Fig. 12(a), the internal thread portion 64a of the screw part 64 is screwed to the external thread portion 61c of the joint body 61.

The front end 63a of the ferrule 63 contacts a cam surface 61e of the joint body 61 in accordance with the screwing of the nut 62, and the pressing force of the front end 63a to the cam surface 61e becomes large in accordance with the screwing of the nut 62. Accordingly, a thin-walled connecting portion 63e of the ferrule 63 is cut and the ferrule 63 is separated from the screw part 64, as illustrated in Fig. 12(b).

When the nut 62 is continuously screwed, a pressing surface 64g of the screw part 64 contacts a cut surface 63g of the ferrule 63 while the front end 63a of the ferrule 63 contacts the cam surface 61e of the joint body 61. In accordance with the screwing of the nut 62, the ferrule 63 receives the pressing force from the pressing surface 64g and the front end 63a of the ferrule 63 bites into the outer circumferential surface 10b of the pipe 10, while being guided by the cam surface 61e, as illustrated in Fig. 12(c). At the same time, the rear end 63b of the ferrule 63 bites into the outer circumferential surface 10b of the pipe 10 due to the pressing force from the pressing surface 64g which is directed inward along the radial direction of the screw part 64, as illustrated in Fig. 12(c).

With the above-mentioned biting of the front end 63a and the rear end 63b of the ferrule 63 into the outer circumferential surface 10b of the pipe 10, the pipe joint 6 connects the pipe 10 to the joint body 61 while ensuring the sealing performance at the connecting portion of the pipe 10. When the holding part 65 further rotates after completing the connection of the pipe 10, the rotational torque of the holding part 65 becomes large and-reaches the predetermined value since the nut 62 has already been fastened. Accordingly, the coupling of a shaft portion 65c of the holding part 65 and a hole 64d of the screw part 64 is cancelled. Then, as illustrated in Fig. 12(d), the holding part 65 comes off the screw part 64. Therefore, it becomes impossible to loosen the screwing of the joint body 61 and the screw part 64 with a general fastening tool, such as a spanner. Consequently, the fastened state of the joint body 61 and the screw part 64 is maintained. Thus, the pipe joint according to the sixth embodiment has the same advantages as the advantages (1) to (5) of the first embodiment.

### (Seventh Embodiment)

Next, a seventh embodiment in which a pipe joint of the present invention is embodied will now be described with reference to Figs. 13(a) to 13(d). The seventh embodiment is the same as the first embodiment in that the separated ferrule bites into the outer circumferential surface of the pipe due to the screwing of the nut to the joint body and that the screw part and the holding part are coupled to each other. The seventh embodiment is different from the first embodiment in that the ferrule is formed integrally with the joint body. In the following description of the embodiment, description of the same configuration as in the first embodiment is omitted or simplified.

Figs. 13(a) to 13(d) are cross-sectional views which illustrate the connecting processes for connecting the pipe with the pipe joint 7 according to the seventh embodiment. Fig. 13(a) illustrates the configuration of the pipe joint 7 before the pipe 10 is connected. The pipe joint 7 includes a joint body 71 into which the pipe 10 is inserted and a nut 72 serving as a fastening member which is screwed to the joint body 71. The nut 72 includes a screw part 74 which connects the pipe 10 to the joint body 71 by being screwed to the joint body 71, and a holding part 75 which is held by a fastening tool, such as a spanner when screwing the nut 72. As in the first embodiment, the holding part 75 and the screw part 74 are configured so that the coupling thereof is cancelled when the rotational torque of the holding part 75 reaches a predetermined value which is larger than the rotational torque at the time of completing the connection of the pipe 10.

An annular ferrule 73 which bites into the outer circumferential surface of the pipe 10 when connecting the pipe 10 is formed integrally with the joint body 71 at the end portion of an annular portion 71b which forms a pipe connecting port 71a that faces the nut 72. The ferrule 73 is formed so as to extend toward the nut 72 from the annular portion 71b. A tapered surface 73h of which the diameter becomes smaller toward the nut 72 is provided at the outer circumferential surface of the distal end of the ferrule 73. The outer circumferential surface of the ferrule 73 is formed substantially like a chevron so that the diameter becomes smaller toward the annular portion 71b from a vertex portion 73i which positions at the vertex of the tapered surface 73h. A through hole 73j into which the pipe 10 is inserted is formed at the axis of the ferrule 73. A recess 73k which is shaped substantially like a chevron extending along the outer circumferential surface of the ferrule 73 is provided on the inner circumferential surface of the ferrule 73. The end portion of the ferrule 73 that faces the annular portion 71b is connected to the annular portion 71b with a thin-walled connecting portion 731 which is formed so as to extend outward along the radial direction of the joint body 71. A notch portion is formed on the inner circumferential surface of the end portion of the thin-walled connecting portion 731 that faces the annular portion 71b. A rear end surface 73m of the ferrule 73 and a pressing surface 71g of the joint body 71 which presses the ferrule 73 toward the nut 72 when the ferrule 73 bites into the pipe 10 face each other in the axial direction of the joint body 71.

The screw part 74 of the nut 72 has a cam surface 74i on the inner circumferential surface at the end portion of a retaining hole 74c that faces the joint body 51. A cam surface 74i is inclined so that the diameter becomes larger toward the joint body 71. As illustrated in Fig. 13(a), a parallel hole surface 74j which is parallel to the axis of the nut 72 is formed at the middle of the cam surface 74i. That is, the cam surface 74i is formed to have three sections, which are a small diameter inclined surface 74k, the parallel hole surface 74j, and a large diameter inclined surface 741. The diameter of the parallel hole surface 74j is set to be smaller than that of the vertex portion 73i of the ferrule 73.

Next, description will be given of a method for connecting the pipe 10 using the pipe joint 7 which is configured as mentioned above. In order to connect the pipe 10 to the joint body 71, first, the pipe 10 is inserted into a retaining hole 75b of the holding part 75 and the retaining hole 74c of the screw part 74, and then, the distal end 10a of the pipe 10 is inserted into the pipe connecting port 71a of the joint body 71. Then, the holding part 75 is rotated in the state where a nut portion 71d of the joint body 71 is held. Accordingly, as illustrated in Fig. 13(a), an external thread portion 74a of the screw part 74 is screwed to an internal thread portion 71c of the joint body 71.

The cam surface 74i of the screw part 74 contacts the tapered surface 73h of the ferrule 73 in accordance with the screwing of the nut 72 and the pressing force of the cam surface 74i to the tapered surface 73h becomes large in accordance with the screwing of the nut 72. Accordingly, the thin-walled connecting portion 731 of the ferrule 73 is cut and the ferrule 73 is separated from the joint body 71, as illustrated in Fig. 13(b).

When the holding part 75 is continuously rotated and the nut 72 is screwed, the cam surface 74i of the screw part 74 contacts the tapered surface 73h of the ferrule 73, and the rear end surface 73m of the ferrule 73 contacts the pressing surface 71g of the joint body 71. In accordance with the screwing of the nut 72, the ferrule 73 receives the pressing force from the pressing surface 71g toward the screw part 74. Then, the vertex portion 73i is pressed inward along the radial direction of the joint body 71 by the parallel hole surface 74j while the front end 73n is pressed by the small diameter inclined surface 74k. Accordingly, the front end 73n and the rear end 73o of the ferrule 73 bite into the outer circumferential surface 10b of the pipe 10, as illustrated in Fig. 13(c).

Thus, the boundary between the rear end 73o of the ferrule 73 and the outer circumferential surface 10b of the pipe 10 and the boundary between the rear end surface 73m of the ferrule 73 and the pressing surface 71g of the joint body 71 are sealed so that the sealing performance at the connecting portion of the pipe 10 is ensured. In addition, since the front end 73n of the ferrule 73 bites into the outer circumferential surface 10b of the pipe 10, the pipe 10 is held more firmly.

In this manner, the pipe joint 7 connects the pipe 10 to the joint body 71 while ensuring the sealing performance at the connecting portion of the pipe 10. When the holding part 75 further rotates after completing the connection of the pipe 10, the rotational torque of the holding part 75 becomes large and reaches the predetermined value since the nut 72 has already been fastened. Accordingly, the coupling of the shaft portion 75c of the holding part 75 and the hole 74d of the screw part 74 is cancelled. Then, as illustrated in Fig. 13(d), the holding part 75 comes off the screw part 74. Therefore, it becomes impossible to loosen the screwing of the joint body 71 and the screw part 74 with a general fastening tool, such as a spanner. Consequently, the fastened state of the joint body 71 and the screw part 74 is maintained.

The pipe joint according to the seventh embodiment has the following advantage in addition to the advantages (1) to (4) of the first embodiment.
(10) The ferrule 73 according to the seventh embodiment is formed integrally with the joint body 71. Therefore, the ferrule 73 does not need to be assembled individually when connecting the pipe 10 and the workability is improved. In addition, the ferrule 73, which is a relatively small part, is prevented from being lost before connecting the pipe 10.

### (Eighth Embodiment)

Next, an eighth embodiment in which a pipe joint of the present invention is embodied will now be described with reference to Figs. 14(a) to 14(c). In the eighth embodiment, the present invention is applied to a pipe joint in which the ferrule is formed integrally with the nut and the ferrule is not separated from the nut even when the ferrule bites into the pipe. In the following description of the embodiment, description of the same configuration as in the first embodiment is omitted or simplified.

Figs. 14(a) to 14(c) are cross-sectional views which illustrate the connecting processes for connecting the pipe with the pipe joint 8 according to the eighth embodiment. Fig. 14(a) illustrates the configuration of the pipe joint 8 before the pipe 10 is connected. The pipe joint 8 includes a joint body 81 into which the pipe 10 is inserted and a nut 82 serving as a fastening member which is screwed to the joint body 81. The nut 82 includes a screw part 84 which connects the pipe 10 to the joint body 81 by being screwed to the joint body 81, and a holding part 85 which is held by a fastening tool, such as a spanner when screwing. As in the first embodiment, the holding part 85 and the screw part 84 are configured so that the coupling thereof is cancelled when the rotational torque of the holding part 85 reaches a predetermined value which is larger than the rotational torque at the time of completing the connection of the pipe 10.

An annular ferrule 83 which bites into the outer circumferential surface of the pipe 10 when connecting the pipe 10 is formed integrally with the screw part 84 of the nut 82. The ferrule 83 is formed at the end portion of a retaining hole 84c of the screw part 84 that faces the joint body 81. The notch portion 14f which is formed on the inner circumferential surface of the retaining hole 14c of the screw part 14 according to the first embodiment and the recess 13f which is formed on the inner circumferential surface 13d of the ferrule 13 according to the first embodiment are omitted in the present embodiment.

Next, description will be given of a method for connecting the pipe 10 with the pipe joint 8 which is configured as mentioned above. In order to connect the pipe 10 to the joint body 81, first, the pipe 10 is inserted into a retaining hole 85b of the holding part 85 and a retaining hole 84c of the screw part 84, and then, the distal end 10a of the pipe 10 is inserted into a pipe connecting port 81a of the joint body 81. Then, the holding part 85 is rotated in the state where a nut portion 81d of the joint body 81 is held. Accordingly, as illustrated in Fig. 14(a), an external thread portion 84a of the screw part 84 is screwed to an internal thread portion 81c of the joint body 81.

In accordance with the screwing of the nut 82, the front end 83a of the ferrule 83 contacts a cam surface 81e of the joint body 81. Then, as illustrated in Fig. 14(b), the front end 83a of the ferrule 83 bites into the outer circumferential surface 10b of the pipe 10, while being guided by the cam surface 81e in accordance with the screwing of the nut 82.

With the above-mentioned biting of the front end a of the ferrule 83 into the outer circumferential surface 10b of the pipe 10, the pipe joint 8 connects the pipe 10 to the joint body 81 while ensuring the sealing performance at the connecting portion of the pipe 10. When the holding part 85 further rotates after completing the connection of the pipe 10, the rotational torque of the holding part 85 becomes large and reaches the predetermined value since the nut 82 has already been fastened. Accordingly, the coupling of a shaft portion 85c of the holding part 85 and a hole 84d of the screw part 84 is cancelled, and the holding part 85 comes off the screw part 84, as illustrated in Fig. 14(c). Therefore, it becomes impossible to loosen the screwing of the joint body 81 and the screw part 84 with a general fastening tool, such as a spanner. Consequently, the fastened state of the joint body 81 and the screw part 84 is maintained. Thus, the pipe joint according to the eighth embodiment has the same advantages as the advantages (1) to (5) of the first embodiment.

### (Ninth Embodiment)

Next, a ninth embodiment in which a pipe joint of the present invention is embodied will now be described with reference to Figs. 15(a) to 15(c). In the ninth embodiment, the invention is applied to a pipe joint in which a ferrule is formed as a separate part, instead of being formed integrally with the nut nor the joint body. In the configuration of the ninth embodiment, the ferrule is formed as a separate part in the pipe joint 6 according to the sixth embodiment. In the following description of the embodiment, description of the same configuration as in the sixth embodiment is omitted or simplified.

Figs. 15(a) to 15(c) are cross-sectional views which illustrate the connecting processes for connecting the pipe with the pipe joint 9 according to the ninth embodiment. Fig. 15(a) illustrates the configuration of the pipe joint 9 before the pipe 10 is connected. The pipe joint 9 includes a joint body 91 into which the pipe 10 is inserted and a nut 92 serving as a fastening member which is screwed to the joint body 91. The nut 92 includes a screw part 94 which connects the pipe 10 to the joint body 91 by being screwed to the joint body 91, and a holding part 95 which is held by a fastening tool, such as a spanner when screwing the nut 92.
As in the first embodiment, the holding part 95 and the screw part 94 are configured so that the coupling thereof is cancelled when the rotational torque of the holding part 95 reaches a predetermined value which is larger than the rotational torque at the time of completing the connection of the pipe 10. The pipe joint 9 has an annular ferrule 93 which bites into the outer circumferential surface of the pipe 10 when connecting the pipe 10. The ferrule 93 is located between the joint body 91 and the nut 92. The ferrule 93 includes a front ferrule 96 which is located at a position facing the joint body 91 and has a through hole 96a at the axis, and a back ferrule 97 which is located at a position facing the nut 92 and has a through hole 97a at the axis.

A pressing surface 94m which presses the back ferrule 97 is formed at an end portion of a retaining hole 94c that faces the joint body 91. The pressing surface 94m is inclined so that the diameter becomes larger toward the joint body 91 so as to press a rear end 97b of the back ferrule 97 inward along the radial direction of the screw part 94 when screwing the nut 92.

A tapered surface 97d is formed at the distal end 97c of the back ferrule 97. The diameter of the tapered surface 97d becomes smaller toward the distal end so as to press a rear end 96b of the front ferrule 96 outward along the radial direction of the joint body 91. The distal end 97c of the back ferrule 97 is formed to be thin-walled in the radial direction of the joint body 91 so that the distal end 97c bites into the outer circumferential surface 10b of the pipe 10 due to the pressing action. A tapered surface 96c which closely contacts the tapered surface 97d of the back ferrule 97 is formed at the rear end 96b of the front ferrule 96. A tapered surface 96e of which the diameter becomes smaller toward the joint body 91 is formed at the distal end 96d of the front ferrule 96.

Next, description will be given of a method for connecting the pipe 10 with the pipe joint 9 which is configured as mentioned above. In order to connect the pipe 10 to the joint body 91, first, the pipe 10 is inserted into a retaining hole 95b of the holding part 95, a retaining hole 94c of the screw part 94 and through holes 96a, 97a of the front ferrule 96 and the back ferrule 97, and then, the distal end 10a of the pipe 10 is inserted into a pipe connecting port 91a of the joint body 91. Then, the holding part 95 is rotated in the state where a nut portion 91d of the joint body 91 is held. Accordingly, as illustrated in Fig. 15(a), an internal thread portion 94a of the screw part 94 is screwed to an external thread portion 91c of the joint body 91.

In accordance with the screwing of the nut 92, the back ferrule 97 is pressed inward along the radial direction of the screw part 94 by a pressing surface 94m, and the distal end 97c bites into the outer circumferential surface 10b of the pipe 10, as illustrated in Fig. 15(b). At the same time, the distal end 96d of the front ferrule 96 is pressed by a cam surface 91e of the joint body 91 due to the pressing between the tapered surface 97d of the back ferrule 97 and the tapered surface 96c of the front ferrule 96. Accordingly, the tapered surface 96e closely contacts the cam surface 91e, and the distal end 96d bites into the outer circumferential surface 10b of the pipe 10.

Thus, the boundary between the distal end 96d of the front ferrule 96 and the outer circumferential surface 10b of the pipe 10 and the boundary between the tapered surface 96e of the front ferrule 96 and the cam surface 91e of the joint body 91 are sealed so that the sealing performance at the connecting portion of the pipe 10 is ensured. In addition, since the distal end 97c of the back ferrule 97 bites into the outer circumferential surface 10b of the pipe 10, the pipe 10 is held more firmly.

In this manner, the pipe joint 9 connects the pipe 10 to the joint body 91 while ensuring the sealing performance at the connecting portion of the pipe 10. When the holding part 95 further rotates after completing the connection of the pipe 10, the rotational torque of the holding part 95 becomes large and reaches the predetermined value since the nut 92 has already been fastened. Accordingly, the coupling of a shaft portion 95c of the holding part 95 and a hole 94d of the screw part 94 is cancelled. Then, as illustrated in Fig. 15(c), the holding part 95 comes off the screw part 94. Therefore, it becomes impossible to loosen the screwing of the joint body 91 and the screw part 94 with a general fastening tool, such as a spanner. Consequently, the fastened state of the joint body 91 and the screw part 94 is maintained. Thus, the pipe joint according to the ninth embodiment has the same advantages as the advantages (1) to (4) of the first embodiment. Further, since the pipe joint 9 has the two separated ferrules 96, 97, high sealing performance is exerted.

### (Tenth Embodiment)

Next, a tenth embodiment in which a pipe join= of the present invention is embodied will now be described with reference to Figs. 16(a) to 16(c). In the tenth embodiment, the invention is applied to a so-called flared pipe joint to which a pipe of which the end portion is machined to be flare-shaped is connected.

Figs. 16(a) to 16(c) are cross-sectional views which illustrate the connecting processes for connecting the pipe with the pipe joint 100 according to the tenth embodiment. Fig. 16(a) illustrates the configuration of the pipe joint 100 before the pipe 10 is connected. The pipe joint 100 includes a joint body 101 into which the pipe 10 is inserted and a nut 102 serving as a fastening member which is screwed to the joint body 101. The nut 102 includes a screw part 104 which connects the pipe 10 to the joint body 101 by being screwed to the joint body 101, and a holding part 105 which is held by a fastening tool, such as a spanner when screwing the nut 102. As in the first embodiment, the holding part 105 and the screw part 104 are configured so that the coupling thereof is cancelled when the rotational torque of the holding part 105 reaches a predetermined value which is larger than the rotational torque at the time of completing the connection of the pipe 10.

The joint body 101 includes a through hole 101a which is formed at the axis, an external thread portion 101b to which the screw part 104 of the nut 102 is screwed, and a nut portion 101c which is formed at the outer circumference. The joint body 101 has a first conical surface 101d of which the diameter becomes smaller toward the nut 102 at an end portion of the through hole 101a that faces the nut 102. The first conical surface 101d closely contacts the inner circumferential surface of the end portion 10c of the pipe 10 which is machined to be flare-shaped when screwing the nut 102 to the joint body 101.

The screw part 104 of the nut 102 includes an internal thread portion 104a which is screwed to an external thread portion 101b of the joint body 101 and a through hole 104b which is formed at the axis of the screw part 104 and into which the pipe 10 is inserted. The screw part 104 has a second conical surface 104c of which the diameter becomes larger toward the joint body 101 at an end portion of the through hole 104b that faces the joint body 101. The second conical surface 104c closely contacts the outer circumferential surface of the end portion 10c of the pipe 10 which is machined to be flare-shaped when screwing the nut 102 to the joint body 101.

Next, description will be given of a method for connecting the pipe 10 using the pipe joint 100 which is configured as mentioned above. In order to connect the pipe 10 to the joint body 101, first, the pipe 10 is inserted into a retaining hole 105b which is formed at the axis of the holding part 105 and the through hole 104b of the screw part 104, and then, the end portion 10c of the pipe 10 is machined to be flare-shaped. Then, the holding part 105 is rotated in the state where the nut portion 101c of the joint body 101 is held. Accordingly, as illustrated in Fig. 16(a), the internal thread portion 104a of the screw part 104 is screwed to the external thread portion 101b of the joint body 101.

In accordance with the screwing of the nut 102, the end portion 10c of the pipe 10 is clamped by the first conical surface 101d and the second conical surface 104c. Thus, the boundary between the first conical surface 101d of the joint body 101 and the end portion 10c of the pipe 10 and the boundary between the second conical surface 104c of the screw part 104 and the end portion 10c of the pipe 10 are sealed so that the sealing performance at the connecting portion of the pipe is ensured.

In this manner, the pipe joint 100 connects the pipe 10 to the joint body 101 while ensuring the sealing performance at the connecting portion of the pipe 10. When the holding part 105 further rotates after completing the connection of the pipe 10, the rotational torque of the holding part 105 becomes large and reaches the predetermined value since the nut 102 has already been fastened. Accordingly, the coupling of the shaft portion 105c of the holding part 105 and the hole 104d of the screw part 104 is cancelled. Then, as illustrated in Fig. 16(c), the holding part 105 comes off the screw part 104. Therefore, it becomes impossible to loosen the screwing of the joint body 101 and the screw part 104 with a general fastening tool, such as a spanner. Consequently, the fastened state of the joint body 101 and the screw part 104 is maintained.

Therefore, the pipe joint according to the tenth embodiment has the following advantage in addition to the advantages (1) to (3) of the first embodiment.
(11) With the pipe joint 100 according to the tenth embodiment, the end portion 10c of the pipe 10 which is machined to be flare-shaped is clamped by the first conical surface 101d of the joint body 101 and the second conical surface 104c of the screw part 104 by screwing the nut 102 to the joint body 101. Accordingly, the pipe 10 is connected to the joint body 101. Even with the flared pipe joint which is configured as mentioned above, it becomes impossible to easily loosen the screwing of the joint body 101 and the screw part 104 in the state where the pipe is connected by cancelling the coupling of the holding part 105 and the screw part 104 after the connection of the pipe 10 is completed.

The configuration of each of the embodiments may be modified as described in the following.

In the first embodiment, the holding part 15 and the screw part 14 which configure the nut 12 are coupled to each other by utilizing the frictional force at the contacting surfaces. However, the parts may be coupled to each other by being bonded to each other at the contacting surfaces. The configuration to bond the holding part 15 and the screw part 14 includes a configuration to bond the outer circumferential surface of the shaft portion 15c of the holding part 15 to the circumferential surface of the hole 14d of the screw part 14. In this case, when the rotational torque of the holding part 15 reaches the predetermined value which is larger than the rotational torque at the time of completing the connection of the pipe 10, the holding part 15 and the screw part 14 start relative movement against the adhesion force, and the coupling of the holding part 15 and the screw part 14 is cancelled. With this configuration, after the connection of the pipe 10 is completed by screwing the nut 12, the coupling of the holding part 15 and the screw part 14 is cancelled and the rotational torque of the holding part 15 is not transmitted to the screw part 14 any more. Therefore, it becomes impossible to easily loosen the screwing of the joint body 11 and the screw part 14 in the state where the pipe 10 is connected, and improper discharge of refrigerant gas is prevented. Further, it becomes possible to adjust the rotational torque for cancelling the coupling of the holding part 15 and the screw part 14 by adjusting the adhesion force for bonding both parts.

The holding part 15 and the screw part 14 according to the first embodiment are coupled by utilizing the frictional force between the contacting surfaces of the shaft portion 15c of the holding part 15 and the hole 14d of the screw part 14 by means of the press-fitting of the shaft portion 15c into the hole 14d. However, other configurations may be adopted as long as the frictional force between the contacting surfaces is utilized. For example, a side surface of the holding part 15 that faces the screw part 14 and a side surface of the screw part 14 that faces the holding part 15 may be pressed against each other along the axial direction of the nut 12 by urging means, such as a spring, so that the holding part 15 and the screw part 14 are coupled to each other by utilizing the frictional force at both side surfaces.
In the first embodiment, the holding part 15 and the screw part 14 are coupled in the state where the shaft portion 15c of the holding part 15 is press-fitted into the hole 14d of the screw part 14. However, instead of this configuration, the holding part 15 and the screw part 14 may be coupled in the state where a shaft portion formed at the screw part 14 is press-fitted into a hole formed at the holding part 15. Further, in the second and third embodiments, the holding part and the screw part are coupled by the screwing of the external thread portion of the holding parts 25, 35 to the internal thread portion of the screw parts 24, 34. However, instead of this configuration, the holding part and the screw part may be coupled by the screwing of an internal thread portion formed at the holding parts 25, 35 to an external thread portion formed at the screw parts 24, 34.

The holding part 45 according to the fourth embodiment is made of resin. However, the holding part 45 may be made of material other than resin as long as the holding part 45 is configured to be broken by receiving the rotational torque which exceeds the predetermined value from a fastening tool.

In the fifth to the tenth embodiments, the holding part and the screw part are coupled as the mode of the coupling of the first embodiment. However, the holding part and the screw part may be coupled as the mode of coupling of each of the embodiments of the second to the fourth.

In the first to seventh embodiments, the ferrule is formed integrally with the joint body or the nut. However, the ferrule may be connected to the joint body or the nut by bonding, press-fitting or the like and cut at the connecting portion when screwing the nut.

In the sixth embodiment, the internal thread portion and the external thread portion which are provided respectively at the joint body and the nut according to the first embodiment are interchanged. In the pipe joint according to the second to fifth, the seventh, and the eighth embodiments, the internal thread portion and the external thread portion may also be interchanged. Further, in the pipe joint according to the ninth and the tenth embodiments, the internal thread portion and the external thread portion which are formed respectively at the joint body and the nut may also be interchanged.

In the ninth embodiment, the two ferrules 96, 97 are used as the ferrule 93 which bites into the outer circumferential surface of the pipe. However, only one ferrule may be used.

In each of the embodiments above, a pipe is connected to only one end of the joint body. However, a pipe may also be connected to the other end of the joint body with the same configuration as the one end. Further, three or more pipe connecting ports are provided at the joint body and the pipe joint may be used at the position where fluid is merged or branched.

The configuration of the pipe joint according to each of the embodiments above is suitably utilized at a connecting portion of refrigerant pipes for a refrigeration device and a connecting portion of a pipe for a closing valve. The pipe joint according to each of the embodiments may be used at a connecting portion of a water supply pipe through which water flows and a connecting portion of a pipe which is made of resin.

In each of the embodiments above, the kind of fluid which flows in a pipe is not particularly limited. The pipe joint according to each of the embodiments may be used for the connection of a pipe through which supercritical refrigerant, such as carbon dioxide refrigerant or hydrocarbon refrigerant, such as propane and isobutene flows. With the pipe joint according to each of the embodiments, it is impossible to easily loosen the screwing of the joint body and the nut and to easily remove the pipe by loosening the screwing. Therefore, the pipe joint according to each of the embodiments is suitably utilized in a case where high pressure is applied to a connecting portion of a pipe or a case where leakage of refrigerant which has high flammability has to be reliably prevented.

## Claims

1. A pipe joint for connecting a pipe to a joint body by screwing a fastening member to the joint body, the pipe joint being **characterized in that** the fastening member comprises a screw part which is screwed to the joint body and connects the pipe to the joint body, and a holding part which is held by a fastening tool when screwing the fastening member,
wherein the holding part and the screw part are coupled to each other before the screwing of the fastening member to the joint body, and
wherein, at the time of screwing the fastening member to the joint body, the coupling of the holding part and the screw part is cancelled when the rotational torque of the holding part reaches a predetermined value which is larger than the rotation toque for completing the connection of the pipe.

2. The pipe joint according to claim 1, **characterized in that** the holding part and the screw part are coupled by utilizing the frictional force at the contacting surfaces of both parts,
wherein, when the rotational torque of the holding part reaches the predetermined value, the holding part and the screw part start relative movement against the frictional force, so that the coupling of the holding part and the screw part is cancelled.

3. The pipe joint according to claim 2, **characterized in that** the holding part and the screw part are coupled by press-fitting a shaft portion which is substantially coaxial with the rotation axis of the screwing and is disposed at either one of the holding part and the screw part into a hole which is provided at the other one of the holding part and the screw part.

4. The pipe joint according to claim 1, **characterized in that** the holding part and the screw part are coupled by adhesion at the contacting surfaces of both parts,
wherein, when the rotational torque of the holding part reaches the predetermined value, the holding part and the screw part start relative movement against the adhesion force, so that the coupling of the holding part and the screw part is cancelled.

5. The pipe joint according to claim 1, **characterized in that** the screwing of the screw part to the joint body is performed with a first screw portion which is provided to each of the screw part and the joint body,
wherein the coupling of the holding part and the screw part is performed by the screwing of the holding part and the screw part using a second screw portion which is provided to each of the holding part and the screw part,
wherein the rotation direction of the holding part for the screwing of the holding part and the screw part is set to be the reverse direction of the rotation direction of the screw part for the screwing of the screw part and the joint body, and
wherein, at the time of screwing the fastening member to the joint body, the coupling of the holding part and the screw part is cancelled by loosening the screwing of the screw part and the joint body with the second screw portion after completing the connection of the pipe by the screwing of the fastening member and the joint body with the first screw portion.

6. The pipe joint according to claim 1, **characterized in that** the screwing of the screw part to the joint body is performed with a third screw portion which is provided to each of the screw part and the joint body,
wherein the coupling of the holding part and the screw part is performed by the screwing of the holding part and the screw part with a fourth screw portion which is provided to each of the holding part and the screw part,
wherein the rotation direction of the holding part for the screwing of the holding part and the screw part is set to be the same as the rotation direction of the screw part for the screwing of the screw part and the joint body, and
wherein, at the time of screwing the fastening member to the joint body, the coupling of the holding part and the screw part is cancelled when the fourth screw portion is broken after the connection of the pipe is completed by the screwing of the fastening member and the joint body with the third screwing member.

7. The pipe joint according to claim 1, **characterized in that** the coupling of the holding part and the screw part is cancelled when the rotational torque of the holding part reaches the predetermined value so that the holding part is broken.

8. The pipe joint according to claim 7, **characterized in that** the holding member is formed of resin.

9. The pipe joint according to any one of claims 1 to 8, **characterized by** an annular ferrule which deforms toward the pipe by contacting a cam surface which is formed either at the joint body or the fastening member at the time of screwing the fastening member to the joint body, and
wherein the pipe is connected to the joint body by the ferrule biting into a surface of the pipe.

10. The pipe joint according to any one of claims 1 to 8, **characterized in that** the joint body has a first conical surface of which the diameter becomes smaller toward the fastening member,
wherein the screw part has a second conical surface of which the diameter becomes larger toward the joint body, and
wherein an end of the pipe is machined to be flare-shaped by the screwing of the fastening member to the joint body, and the end of the pipe is clamped between the first conical surface and the second conical surface, so that the pipe is connected to the joint body.
